(19) Europäisches Patentamt / European Patent Office / Office européen des brevets

(11) **EP 4 236 554 A1**

(12) **EUROPEAN PATENT APPLICATION**
published in accordance with Art. 153(4) EPC

(43) Date of publication:
**30.08.2023  Bulletin 2023/35**

(21) Application number: **21883117.0**

(22) Date of filing: **14.10.2021**

(51) International Patent Classification (IPC):
*H04W 72/12* (2023.01)       *H04W 72/04* (2023.01)
*H04W 52/02* (2009.01)       *H04L 5/00* (2006.01)
*H04W 76/28* (2018.01)

(52) Cooperative Patent Classification (CPC):
H04L 5/00; H04W 52/02; H04W 72/04;
H04W 72/12; H04W 76/28; Y02D 30/70

(86) International application number:
**PCT/KR2021/014202**

(87) International publication number:
**WO 2022/086046 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2020  KR 20200137395**

(71) Applicant: **LG ELECTRONICS, INC.**
**Seoul 07336 (KR)**

(72) Inventors:
• **LEE, Sunghoon**
  Seoul 06772 (KR)
• **KIM, Jaehyung**
  Seoul 06772 (KR)
• **YANG, Suckchel**
  Seoul 06772 (KR)
• **KIM, Seonwook**
  Seoul 06772 (KR)
• **HWANG, Seunggye**
  Seoul 06772 (KR)

(74) Representative: **Plasseraud IP**
**66, rue de la Chaussée d'Antin**
**75440 Paris Cedex 09 (FR)**

(54) **METHOD FOR TRANSMITTING/RECEIVING DOWNLINK CONTROL INFORMATION, AND DEVICE THEREFOR**

(57)    The present disclosure provides a method by which a terminal for supporting a discontinuous reception (DRX) operation receives downlink control information (DCI) in a wireless communication system. Particularly, the method comprises receiving first information related to a monitoring window for the DCI, and receiving the DCI within the monitoring window on the basis of the first information, wherein the monitoring window is set within a DRX active time, the first information includes an offset, and information related to the duration of the monitoring window, and the offset can be the distance from the start point of the DRX active time to the start point of the monitoring window.

FIG. 18

**Description**

**TECHNICAL FIELD**

The present disclosure relates to a method of transmitting and receiving downlink control information and apparatus therefor, and more particularly, to a method of configuring a monitoring window for transmitting and receiving downlink control information (DCI) format 2_6 within a discontinuous reception (DRX) active time and apparatus therefor.

**BACKGROUND**

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

**DISCLOSURE**

**TECHNICAL PROBLEM**

An object of the present disclosure is to provide a method of transmitting and receiving a downlink control information and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, there is provided a method of receiving downlink control information (DCI) by a user equipment (UE) supporting a discontinuous reception (DRX) operation in a wireless communication system. The method may include: receiving first information related to a monitoring window for the DCI; and receiving the DCI within the monitoring window based on the first information. The monitoring window may be configured within a DRX active time. The first information may include information related to an offset and a duration of the monitoring window. The offset may be a distance from a starting point of the DRX active time to a starting point of the monitoring window.

The offset may be expressed based on a number of slots.

The DCI may be received in a first search space (SS) set allocated within the monitoring window, and monitoring may not be performed in a second SS set allocated after the first SS set within the monitoring window.

The first information may include information related to a periodicity with which the monitoring window is repeatedly allocated, and the monitoring window may be repeatedly allocated within the DRX active time based on the information related to the periodicity.

The DCI may correspond to DCI format 2_6.

In another aspect of the present disclosure, there is provided a LTE supporting a DRX operation and configured to receive DCI. The UE may include: at least one transceiver; at least one processor; and at least one memory operably connected to the at least one processor and configured to store instructions that, when executed, cause the at least one processor to perform operations. The operations may include: receiving first information related to a monitoring window for the DCI through the at least one transceiver; and receiving the DCI within the monitoring window based on the first information through the at least one transceiver. The monitoring window may be configured within a DRX active time. The first information may include information related to an offset and a duration of the monitoring window. The offset may be a distance from a starting point of the DRX active time to a starting point of the monitoring window.

The offset may be expressed based on a number of slots.

The DCI may be received in a first search space (SS) set allocated within the monitoring window, and monitoring may not be performed in a second SS set allocated after the first SS set within the monitoring window.

The first information may include information related to a periodicity with which the monitoring window is repeatedly allocated, and the monitoring window may be repeatedly allocated within the DRX active time based on the information related to the periodicity.

The DCI may correspond to DCI format 2_6.

In another aspect of the present disclosure, there is provided an apparatus supporting a DRX operation and configured to receive DCI in a wireless communication system. The apparatus may include: at least one processor; and at least one memory operably connected to the at least one processor and configured to store instructions that, when executed, cause the at least one processor to perform operations. The operations may include: receiving first information related to a monitoring window for the DCI; and receiving the DCI within the monitoring window based on the first information. The monitoring window may be configured within a DRX active time. The first information may include information related to an offset and a duration of the monitoring window. The offset may be a distance from a starting point of the DRX active time to a starting point of the monitoring window.

In another aspect of the present disclosure, there is provided a computer-readable storage medium including at least one computer program that causes at least one processor to perform operations. The operations may include: receiving first information related to a monitoring window for the DCI; and receiving the DCI within the monitoring window based on the first information. The monitoring window may be configured within a DRX active time. The first information may include information related to an offset and a duration of the monitoring window. The offset may be a distance from a starting point of the DRX active time to a starting point of the monitoring window.

In another aspect of the present disclosure, there is provided a method of transmitting DCI by a base station capable of configuring a DRX operation in a wireless communication system. The method may include: transmitting first information related to a monitoring window for the DCI; and transmitting the DCI within the monitoring window based on the first information. The monitoring window may be configured within a DRX active time. The first information may include information related to an offset and a duration of the monitoring window. The offset may be a distance from a starting point of the DRX active time to a starting point of the monitoring window.

In a further aspect of the present disclosure, there is provided a base station capable of configuring a DRX operation and configured to transmit DCI in a wireless communication system. The base station may include: at least one transceiver; at least one processor; and at least one memory operably connected to the at least one processor and configured to store instructions that, when executed, cause the at least one processor to perform operations. The operations may include: transmitting first information related to a monitoring window for the DCI through the at least one transceiver; and transmitting the DCI within the monitoring window based on the first information through the at least one transceiver. The monitoring window may be configured within a DRX active time. The first information may include information related to an offset and a duration of the monitoring window. The offset may be a distance from a starting point of the DRX active time to a starting point of the monitoring window.

## ADVANTAGEOUS EFFECTS

According to the present disclosure, a user equipment (UE) may be configured with various operations for power saving even within a discontinuous reception (DRX) active time in downlink control information (DCI) format 2_6.

The LTE may be instructed to monitor only a DCI format required by a network in DCI format 2_6, and parameters for configuring a related search space (SS) set may be adapted.

The complexity of PDCCH monitoring may be reduced based on the quality of reception beams, and blind decoding (BD)/control channel element (CCE) limits may be adjusted based on bandwidth part (BWP) operation.

In addition to the above-described operations, the UE may obtain an advantage in terms of power saving by receiving DCI format 2_6 within the DRX active time.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels and a general signal transmission method using the physical channels in a 3rd generation partnership project (3GPP) system as an exemplary wireless communication system.

FIG. 2 illustrates a radio frame structure.

FIG. 3 illustrates a resource grid during the duration of a slot.

FIG. 4 illustrates exemplary mapping of physical channels in a slot.

FIG. 5 illustrates a process for transmitting a physical uplink control channel (PUCCH) and a physical uplink shared channel (PUSCH).

FIGS. 6, 7, and 8 are diagrams illustrating a physical downlink control channel (PDCCH) in the NR system.

FIGS. 9 and 10 are diagrams for explaining idle mode discontinuous reception (DRX) operation.

FIGS. 11 to 13 are diagrams for explaining DRX operation in a radio resource control (RRC) connected mode.

FIG. 14 is a diagram for explaining a method of receiving downlink control information (DCI) format 2_6 outside a DRX active time.

FIGS. 15, 16 and 17 are a diagram for explaining overall operation processes of a user equipment (UE) and a base station (BS) according to an embodiment of the present disclosure.

FIGS. 18 to 21 are diagrams for explaining methods of configuring a monitoring window for DCI format 2_6 within a DRX active time according to embodiments of the present disclosure.

FIGS. 22 to 24 are diagrams for explaining methods of receiving DCI format 2_6 within a DRX active time according to embodiments of the present disclosure.

FIG. 25 is a diagram for explaining a method of configuring a monitoring window for DCI format 2_6 within a DRX active time according to an embodiment of the present disclosure.

FIG. 26 is a diagram for explaining a method of configuring a time gap for reception of DCI format 2_6 according to an embodiment of the present disclosure.

FIG. 27 is a diagram for explaining a method of configuring a search space (SS) set for DCI format 2_6 according to an embodiment of the present disclosure.

FIG. 28 illustrates an exemplary communication system applied to the present disclosure.

FIG. 29 illustrates an exemplary wireless device applicable to the present disclosure.

FIG. 30 illustrates an exemplary vehicle or autonomous driving vehicle applicable to the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

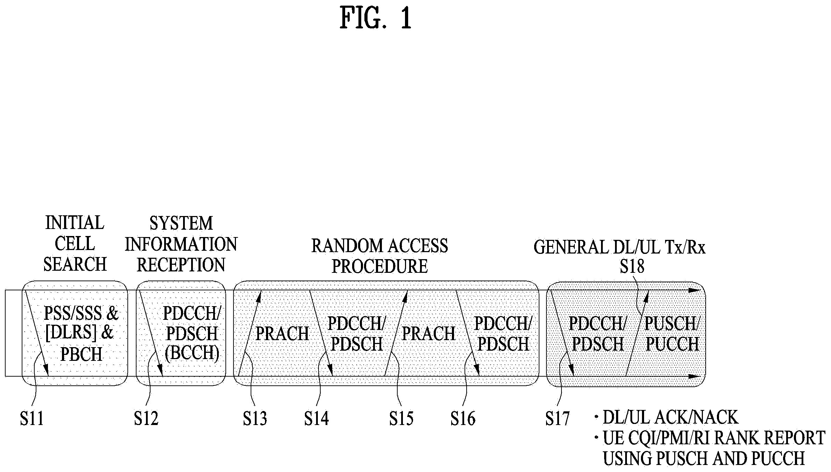

FIG. 1 illustrates physical channels and a general signal transmission method using the physical channels in a 3GPP system.

When a UE is powered on or enters a new cell, the UE performs initial cell search (S11). The initial cell search involves acquisition of synchronization to a BS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the LTE may acquire information broadcast in the cell by receiving the PBCH from the BS. During the initial cell search, the UE may also monitor a DL channel state by receiving a downlink reference signal (DL RS).

After the initial cell search, the UE may acquire more detailed system information by receiving a physical downlink control channel (PDCCH) and a physical downlink shared channel (PDSCH) corresponding to the PDCCH (S12).

Subsequently, to complete connection to the BS, the UE may perform a random access procedure with the BS (S13 to S16). Specifically, the LTE may transmit a preamble on a physical random access channel (PRACH) (S13) and may receive a PDCCH and a random access response (RAR) for the preamble on a PDSCH corresponding to the PDCCH (S14). The UE may then transmit a physical uplink shared channel (PUSCH) by using scheduling information in the RAR (S15), and perform a contention resolution procedure including reception of a PDCCH and a PDSCH signal corresponding to the PDCCH (S16).

When the random access procedure is performed in two steps, steps S13 and S15 may be performed as one step (in which Message A is transmitted by the UE), and steps S14 and S16 may be performed as one step (in which Message B is transmitted by the BS).

After the above procedure, the UE may receive a PDCCH and/or a PDSCH from the BS (S17) and transmit a physical uplink shared channel (PUSCH) and/or a physical uplink control channel (PUCCH) to the BS (S18), in a general UL/DL signal transmission procedure. Control information that the LTE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the UE may transmit the UCI aperiodically on the PUSCH, upon receipt of a request/command from a network.

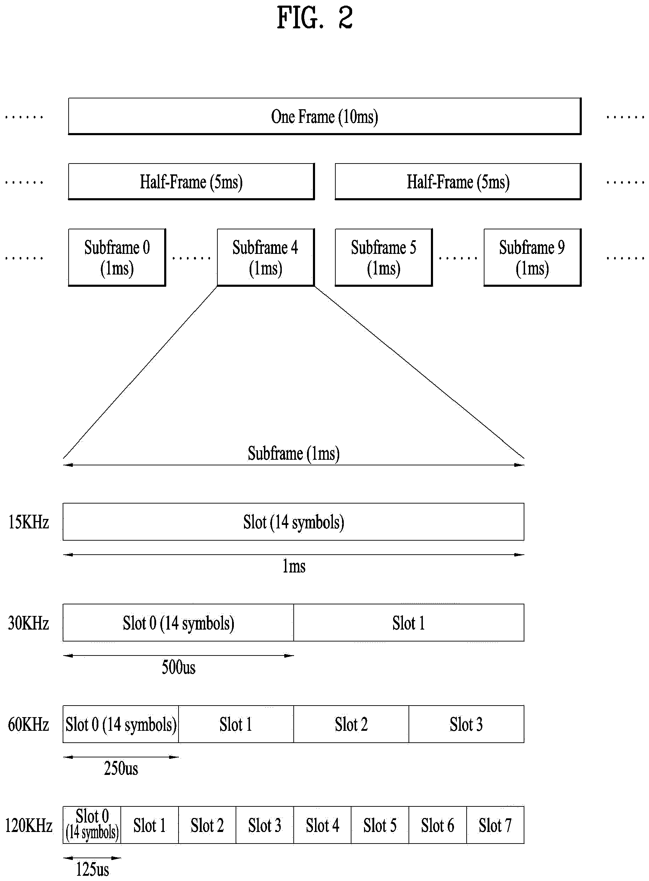

FIG. 2 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | Nslotsymb | Nframe,uslot | Nsubframe,uslot |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |
| * Nslotsymb: number of symbols in a slot * Nframe,uslot: number of slots in a frame<br>* Nsubframe,uslot: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | Nslotsymb | Nframe,uslot | Nsubframe,uslot |
|---|---|---|---|
| 60 kHz (u=2) | 12 | 40 | 4 |

The frame structure is merely an example, and the number of subframes, the number of slots, and the number of symbols in a frame may be changed in various manners. In the NR system, different OFDM(A) numerologies (e.g.,

SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
| --- | --- | --- |
| FR1 | 450 MHz - 7125 MHz | 15, 30, 60 kHz |
| FR2 | 24250 MHz - 52600 MHz | 60, 120, 240 kHz |

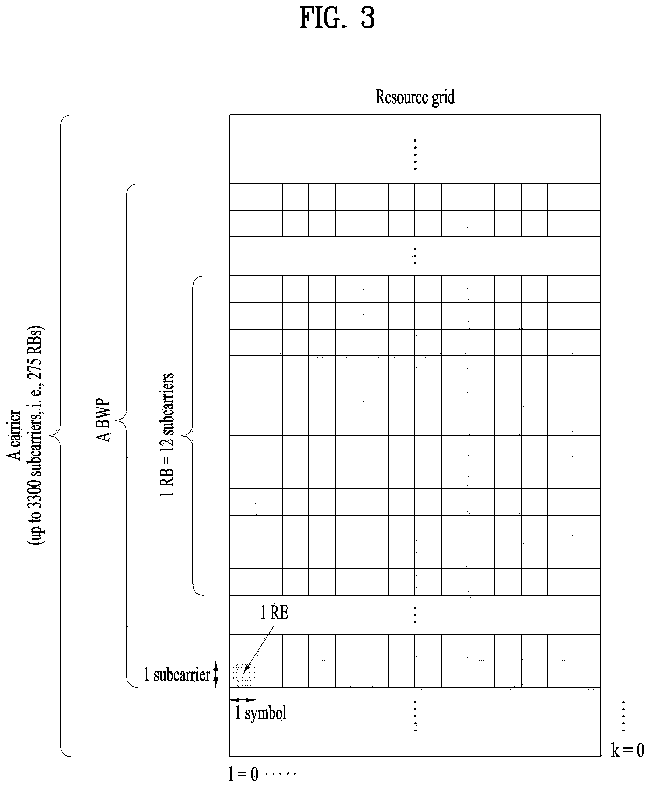

FIG. 3 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

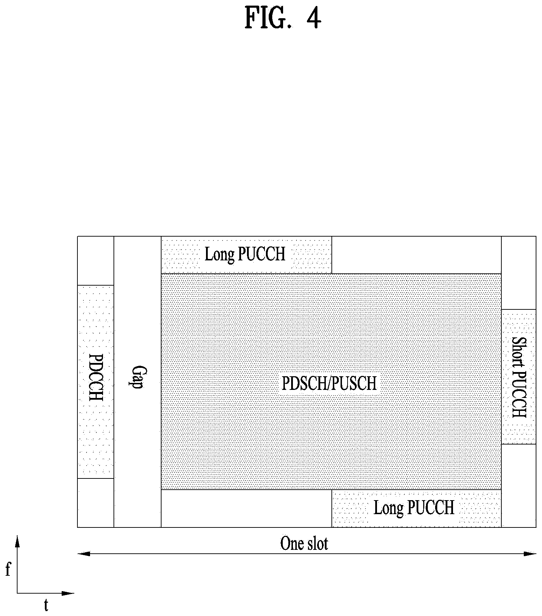

FIG. 4 illustrates exemplary mapping of physical channels in a slot.

A DL control channel, DL or UL data, and a UL control channel may all be included in one slot. For example, the first N symbols (hereinafter, referred to as a DL control region) in a slot may be used to transmit a DL control channel, and the last M symbols (hereinafter, referred to as a UL control region) in the slot may be used to transmit a UL control channel. N and M are integers equal to or greater than 0. A resource region (hereinafter, referred to as a data region) between the DL control region and the UL control region may be used for DL data transmission or LTL data transmission. A time gap for DL-to-LTL or LTL-to-DL switching may be defined between a control region and the data region. A PDCCH may be transmitted in the DL control region, and a PDSCH may be transmitted in the DL data region. Some symbols at the time of switching from DL to UL in a slot may be configured as the time gap.

Now, a detailed description will be given of physical channels.

**DL Channel Structures**

An eNB transmits related signals on later-described DL channels to a UE, and the UE receives the related signals on the DL channels from the eNB.

(1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

(2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (LTL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

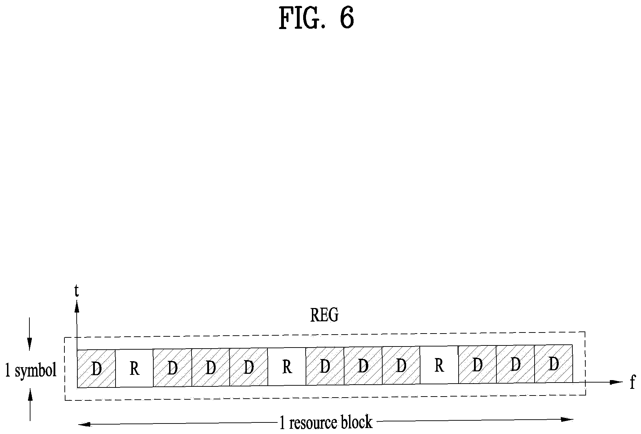

FIG. 6 illustrates an exemplary structure of one REG. In FIG. 6, D represents an RE to which DCI is mapped, and R represents an RE to which a DMRS is mapped. The DMRS is mapped to RE #1, RE #5, and RE #9 along the frequency direction in one symbol.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.

- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.
- pdcch-DMRS-ScramblingID: provides information used for initialization of a PDCCH DMRS scrambling sequence.

For each CORESET, a precoder granularity in the frequency domain is set to one of the followings by higher-layer signaling:

- sameAsREG-bundle: It equals to an REG bundle size in the frequency domain.
- allContiguousRBs: It equals to the number of contiguous RBs in the frequency domain within the CORESET.

The REGs of the CORESET are numbered in a time-first mapping manner. That is, the REGs are sequentially numbered in an ascending order, starting from 0 for the first OFDM symbol of the lowest-numbered RB in the CORESET.

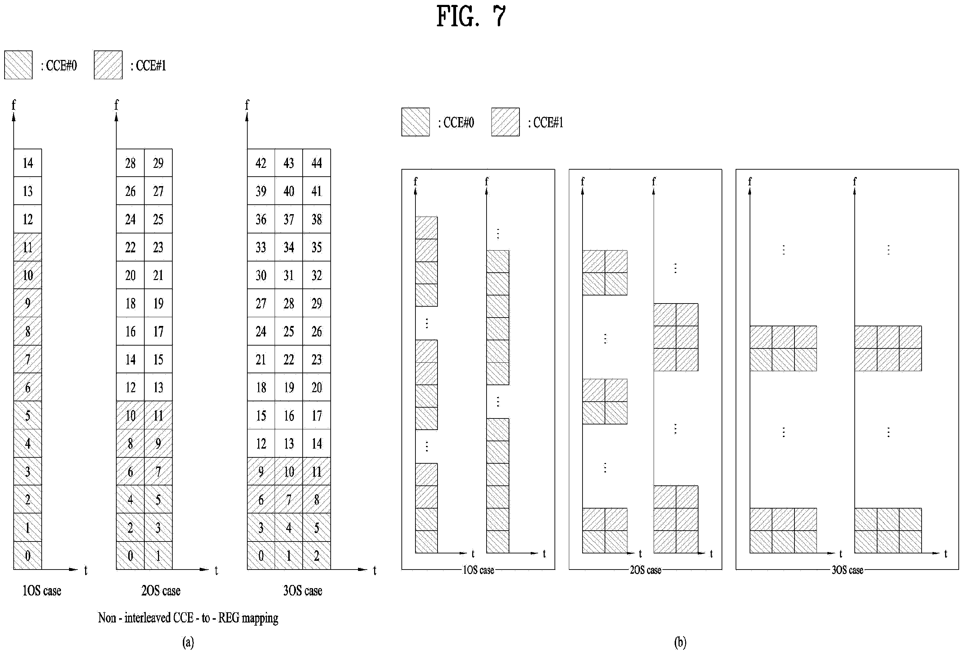

CCE-to-REG mapping for the CORESET may be an interleaved type or a non-interleaved type. FIG. 7(a) is an exemplary view illustrating non-interleaved CCE-REG mapping, and FIG. 7(b) is an exemplary view illustrating interleaved CCE-REG mapping.

- Non-interleaved CCE-to-REG mapping (or localized CCE-to-REG mapping): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved in the CORESET. In a CORESET including one or two OFDM symbols, an REG bundle includes 2 or 6 REGs, and in a CORESET including three OFDM symbols, an REG bundle includes 3 or 6 REGs. An REG bundle size is configured on a CORESET basis.

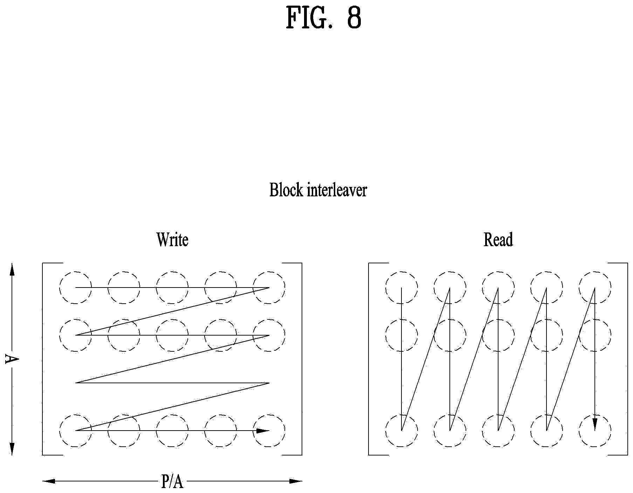

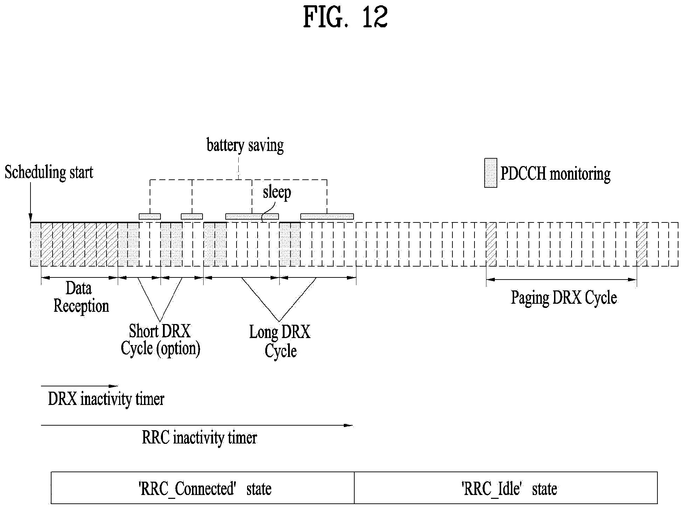

FIG. 8 illustrates an exemplary block interleaver. For the above interleaving operation, the number A of rows in a (block) interleaver is set to one or 2, 3, and 6. When the number of interleaving units for a given CORESET is P, the number of columns in the block interleaver is P/A. In the block interleaver, a write operation is performed in a row-first direction, and a read operation is performed in a column-first direction, as illustrated in FIG. 12. Cyclic shift (CS) of an interleaving unit is applied based on an ID which is configurable independently of a configurable ID for the DMRS.

To receive the PDCCH, the LTE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.

- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The LTE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.

Table 5 illustrates exemplary DCI formats transmitted on the PDCCH.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

(continued)

| DCI format | Usage |
|---|---|
| 2_0 | Notifying a group of LTEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as LTL grant DCI or LTL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a LTE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a LTE configuration in the non-fallback DCI formats.

## UL Channel Structures

A UE transmits a related signal to the BS on a UL channel, which will be described later, and the BS receives the related signal from the UE through the UL channel to be described later.

(1) Physical Uplink Control Channel (PUCCH)

The PUCCH carries UCI, HARQ-ACK and/or scheduling request (SR), and is divided into a short PUCCH and a long PUCCH according to the PUCCH transmission length.
The UCI includes the following information.

- SR: information used to request UL-SCH resources.
- HARQ-ACK: a response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI: feedback information for a DL channel. Multiple input multiple output (MIMO)-related feedback information includes an RI and a PMI.

Table 6 illustrates exemplary PUCCH formats. PUCCH formats may be divided into short PUCCHs (Formats 0 and 2) and long PUCCHs (Formats 1, 3, and 4) based on PUCCH transmission durations.

[Table 6]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |

(continued)

| PUCCH format | Length in OFDM symbols $N^{\text{PUCCH}}_{\text{symb}}$ | Number of bits | Usage | Etc |
|---|---|---|---|---|
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the LTE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

(2) Physical Uplink Shared Channel (PUSCH)

The PUSCH carries LTL data (e.g., LTL-shared channel transport block (LTL-SCH TB)) and/or LTL control information (UCI), and is transmitted based a Cyclic Prefix-Orthogonal Frequency Division Multiplexing (CP-OFDM) waveform or a Discrete Fourier Transform-spread-Orthogonal Frequency Division Multiplexing (DFT-s-OFDM) waveform. When the PUSCH is transmitted based on the DFT-s-OFDM waveform, the UE transmits the PUSCH by applying transform precoding. For example, when transform precoding is not allowed (e.g., transform precoding is disabled), the UE may transmit the PUSCH based on the CP-OFDM waveform. When transform precoding is allowed (e.g., transform precoding is enabled), the UE may transmit the PUSCH based on the CP-OFDM waveform or the DFT-s-OFDM waveform. PUSCH transmission may be dynamically scheduled by the LTL grant in the DCI or may be semi-statically scheduled based on higher layer (e.g., RRC) signaling (and/or Layer 1 (L1) signaling (e.g., PDCCH)) (configured grant). PUSCH transmission may be performed on a codebook basis or a non-codebook basis.

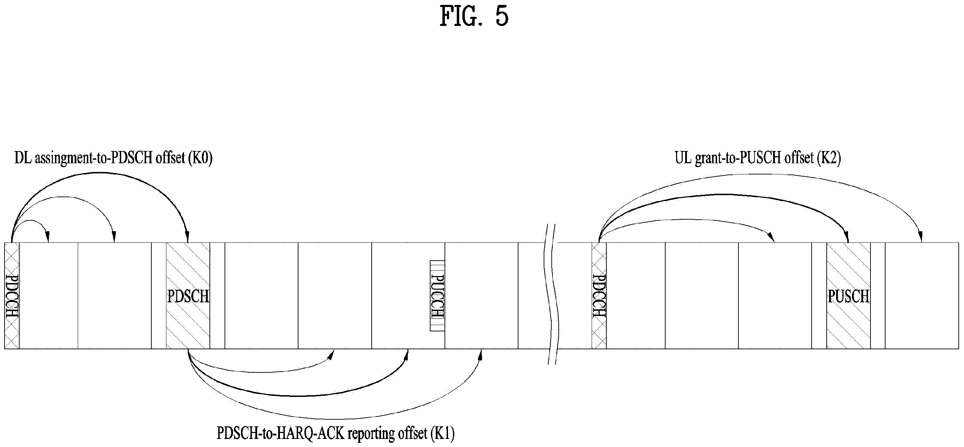

FIG. 5 is a diagram for explaining a HARQ-ACK transmission timing and a PUSCH transmission timing and assignment method.

HARQ-ACK is information indicating whether the UE has successfully received a physical DL channel. Upon successfully receiving the physical DL channel, the UE feeds back acknowledgement (ACK) to the BS and, otherwise, the UE feeds back negative ACK (NACK) to the BS. In NR, HARQ supports 1-bit HARQ-ACK feedback per transport block. FIG. 5 illustrates an example of a HARQ-ACK timing K1.

In FIG. 5, K0 represents the number of slots from a slot with a PDCCH carrying DL assignment (i.e., DL grant) to a slot with corresponding PDSCH transmission, K1 represents the number of slots from a slot with a PDSCH to a slot with corresponding HARQ-ACK transmission, and K2 represents the number of slots from a slot with a PDCCH carrying a UL grant to a slot with corresponding PUSCH transmission. That is, K0, K1, and K2 may be briefly summarized as shown in Table 7 below.

[Table 7]

| | A | B |
|---|---|---|
| K0 | DL scheduling DCI | Corresponding DL data transmission |

(continued)

|    | A                 | B                               |
|----|-------------------|---------------------------------|
| K1 | DL data reception | Corresponding HARQ-ACK          |
| K2 | UL scheduling DCI | Corresponding LTL data transmission |

The BS may provide a HARQ-ACK feedback timing to the UE dynamically by DCI or semi-statically by RRC signaling. The NR system supports different minimum HARQ processing times for UEs. A HARQ processing time includes delay between a DL data reception timing and a corresponding HARQ-ACK transmission timing and delay between a UL grant reception timing and a corresponding UL data transmission timing. The UE transmits information about the capability of a minimum HARQ processing time thereof to the BS. From the viewpoint of the UE, HARQ ACK/NACK feedback signals for a plurality of DL transmissions in the time domain may be transmitted in one LTL data/control region. A timing between DL data reception and corresponding ACK is indicated by the DCI.

Unlike the LTE system in which a transport block (TB)-based or codeword-based HARQ procedure is performed, the NR system supports code block group (CBG)-based transmission of single-bit/multi-bit HARQ-ACK feedback. A TB may be mapped to one or more code blocks (CBs) according to the size thereof. For example, in a channel coding procedure, a cyclic redundancy check (CRC) code is attached to the TB. If a CRC-attached TB is not larger than a certain size, the CRC-attached TB corresponds to one CB. However, if the CRC-attached TB is larger than the certain size, the CRC-attached TB is segmented into a plurality of CBs. In the NR system, the UE may be configured to receive CBG-based transmissions, and retransmission may be scheduled to carry a subset of all CBs of the TB.

Referring to FIG. 5, the UE may detect a PDCCH in slot #n. The PDCCH includes DL scheduling information (e.g., DCI format 1_0 and/or DCI format 1_1). The PDCCH indicates a DL assignment-to-PDSCH offset K0 and a PDSCH-to-HARQ-ACK reporting offset K1. DCI format 1_0 and DCI format 1_1 may include, for example, the following information.

- Frequency domain resource assignment: indicates an RB resource assigned to a PDSCH (e.g. one or more (dis)continuous RBs).
- Time domain resource assignment: indicates K0 and the starting position (e.g., OFDM symbol index) and length (e.g., the number of OFDM symbols) of a PDSCH in a slot.
- PDSCH-to-HARQ_feedback timing indicator: indicates K1.
- HARQ process number (4 bits): indicates a HARQ process identity (ID) for data (e.g., a PDSCH or a TB).
- PUCCH resource indicator (PRI): indicates a PUCCH resource to be used for UCI transmission among a plurality of PUCCH resources in a PUCCH resource set.

Next, the UE may receive a PDSCH in slot #(n+K0) according to scheduling information of slot #n and then transmit UCI on a PUCCH in slot #(n+K1). The UCI includes a HARQ-ACK response to the PDSCH. In the case in which the PDSCH is configured to carry a maximum of one TB, the HARQ-ACK response may be configured as one bit. In the case in which the PDSCH is configured to carry up to two TBs, the HARQ-ACK response may be configured as two bits if spatial bundling is not configured and as one bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

Referring to FIG. 5, the UE may detect a PDCCH in slot #n. The PDCCH includes UL scheduling information (e.g., DCI format 0_0 and/or DCI format 0_1). DCI format 0_0 and DCI format 0_1 may include the following information.

- Frequency domain resource assignment: indicates an RB set assigned to a PUSCH.
- Time domain resource assignment: indicates a slot offset K2 and the starting position (e.g., symbol index) and length (e.g., the number of OFDM symbols) of a PUSCH in a slot. The starting symbol and length may be indicated by a start and length indicator value (SLIV) or may be indicated individually.

Thereafter, the UE may transmit the PUSCH in slot #(n+k2) according to the scheduling information of slot #n. Here, the PUSCH includes a UL-SCH TB.

**DRX (Discontinuous Reception) operation**

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect the PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the LTE can receive/monitor a downlink channel discontiguously. That is, a LTE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.

**[0098]** - RRC_Idle state: state in which a radio connection (RRC connection) is not established between a base station and a UE.

**[0099]** - RRC Inactive state: state in which a radio connection (RRC connection) has been established between a base station and a UE, but a radio connection is inactivated.

**[0100]** - RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. The eDRX may be mainly used for (large-scale) IoT applications. In the Idle mode DRX, whether to permit eDRX may be configured based on system information (e.g., SIB1).

The SIB 1 may include an eDRX-Allowed parameter. The eDRX-Allowed parameter is a parameter indicating whether Idle mode extended DRX is permitted.

**(1) IDLE Mode DRX**

In the IDLE mode, the UE may use DRX to reduce power consumption. One paging occasion (PO) may be a subframe in which a paging-radio network temporary identifier (P-RNTI) based physical downlink control channel (PDCCH) or MPDCCH (MTC PDCCH) or NPDCCH (Narrowband PDCCH) may be transmitted. The P-RNTI-based (M/N) PDCCH may address/schedule a paging message for NB-IoT. For P-RNTI-based MPDCCH transmission, the PO may indicate a first subframe for MPDCCH repetition.

For P-RNTI-based NPDCCH transmission, the PO may indicate a starting subframe for NPDCCH repetition. If the subframe determined by the PO is not a valid NB-IoT DL subframe, the first valid NB-IoT DL subframe after the PO may be the starting subframe for NPDCCH repetition.

One paging frame (PF) is one radio frame which may include one or a plurality of paging occasions. When DRX is used, a UE may be configured to monitor only one PO per DRX cycle. One paging narrowband (PNB) refers to one narrowband in which the UE performs reception/monitoring of paging messages. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (Red-Cap) LTE, normal LTE and/or IAB-MT (mobile termination).

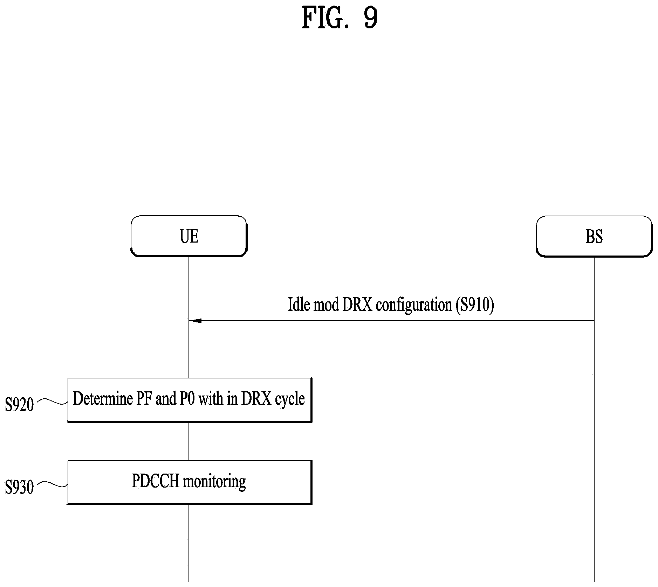

FIG. 9 is a flowchart showing an example of a method of performing an Idle mode DRX operation.

A LTE receives, from a base station, Idle mode DRX configuration information through a higher layer signaling (e.g., system information) (S910).

Furthermore, the LTE determines a PF (Paging Frame) and a PO (Paging Occasion), for monitoring a physical downlink control channel (e.g., PDCCH) in a paging DRX cycle based on the Idle mode DRX configuration information (S920). In this case, the DRX cycle includes On Duration and sleep duration (or Opportunity for DRX).

Furthermore, the UE monitors a PDCCH in the PO of the determined PF (S930). The UE monitors only one subframe(PO) for each paging DRX cycle.

Additionally, if the UE receives a PDCCH (more exactly, CRC of PDCCH) scrambled by a P-RNTI during On duration (i.e., if paging is detected), the UE may transit to a connected mode and transmit or receive data with the base station.

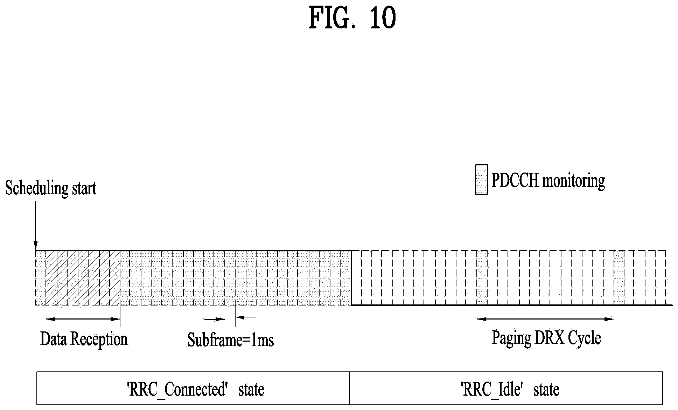

FIG. 10 is a diagram showing an example of an Idle mode DRX operation.

Referring to FIG. 10, if there is a traffic (data) toward a UE in the RRC_Idle state (hereinafter referred to as 'Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

**(2) Connected Mode DRX (C-DRX)**

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the LTE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

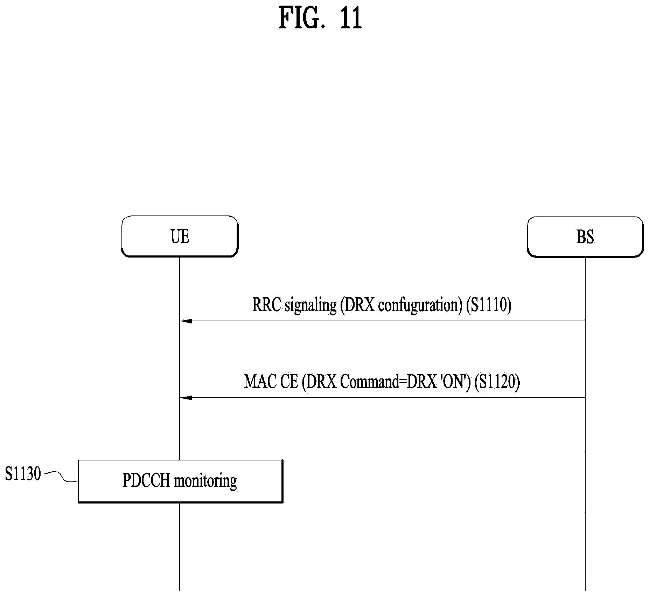

FIG. 11 is a flowchart showing an example of a method of performing a C-DRX operation.

A LTE receives, from a base station, RRC signalling (e.g., MAC-MainConfig IE) including DRX configuration information (S1110). The DRX configuration information may include the following information.

- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to the number of PDCCH monitoring subframe to be continuously monitored at the beginning of a DRX cycle.
- drx-InactivityTimer: the duration after the PDCCH occasion in which a PDCCH indicates a new UL or DL transmission for the MAC entity. For example, the duration may be the number of subframes after the LTE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.

- drx-RetransmissionTimer: for DL, the maximum duration until a DL retransmission is received; for UL the maximum duration until a grant for LTL retransmission is received. For example, it may indicate the number of PDCCH subframes to be continuously monitored when HARQ retransmission is expected.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- Active time: total duration that the UE monitors PDCCH, which may include (a) the "on-duration" of the DRX cycle, (b) the time UE is performing continuous reception while the drx-inactivity timer has not expired, and (c) the time when the LTE is performing continuous reception while waiting for a retransmission opportunity.

Specifically, when the DRX cycle is configured, an active time for a serving cell of a DRX group includes the following.

- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S1120), the UE monitors a PDCCH for the ON duration of a DRX cycle based on the DRX configuration (S1130).

FIG. 12 is a diagram showing an example of a C-DRX operation.

Referring to FIG. 12, when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the LTE shifts to an Idle state and performs an Idle mode DRX operation.

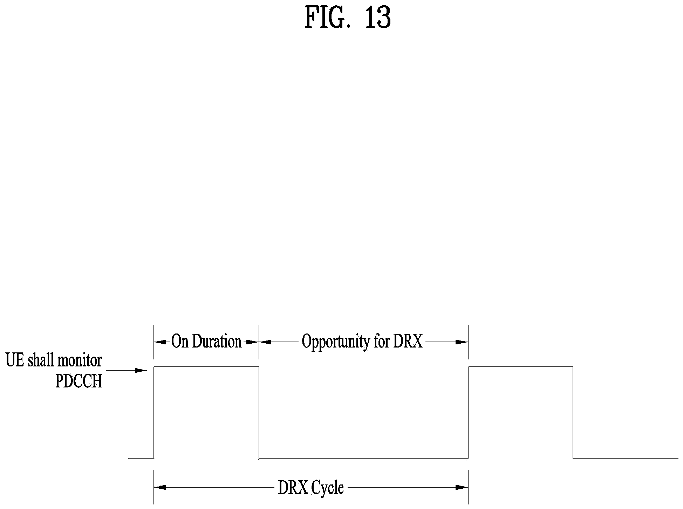

FIG. 13 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be the basis for determining whether the UE needs to perform PDCCH monitoring within the on-duration of each DRX cycle (or a plurality of DRX cycles). If the UE detects no WUS on a specified or indicated WUS occasion, the LTE may maintain the sleep mode without performing PDCCH monitoring in one or more DRX cycles associated with the corresponding WUS.

The present disclosure defines a monitoring window for the UE configured with DRX operation to detect newly introduced DCI format 2_6 within a DRX active time.

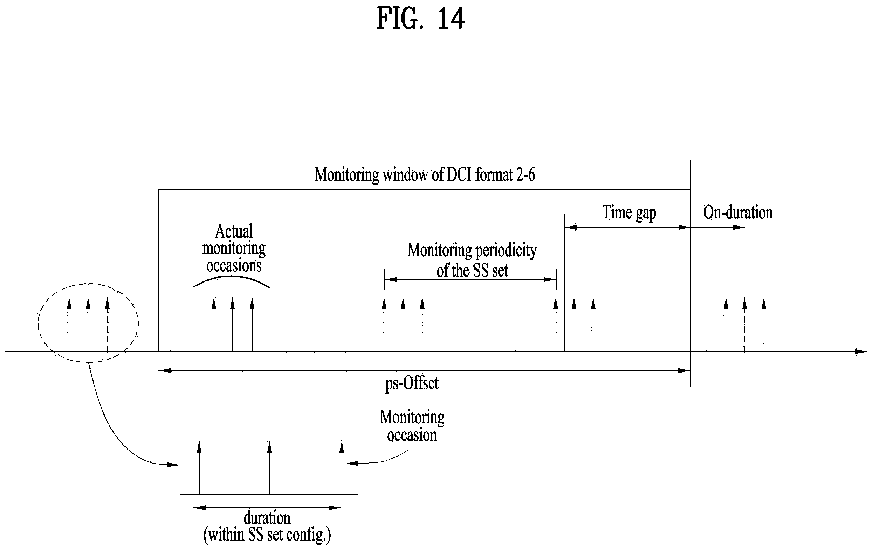

In the current Rel-16 NR system, DCI format 2_6 may be received only for a certain period of time (e.g., ps-Offset) before the DRX active time starts as shown in FIG. 14.

Therefore, the monitoring window for the UE to receive DCI format 2_6 even within the DRX active time may be defined in the present disclosure.

As technologies for power saving in future wireless communication systems (e.g., Rel-17 NR systems, etc.), various methods such as search space (SS) set adaptation, dynamic CORESET on/off (e.g., PDCCH or MAC CE), and/or adaptation of a blind detection (BD)/CCE limit may be used to reduce power consumption of the UE within the DRX active time

The blind decoding (BD) limit may mean the number of PDCCH candidates (e.g., the number of times of BD) that the UE should monitor during a time unit. The CCE limit may be associated with channel estimation capability required for PDCCH detection at the UE. The CCE limit may be determined based on the number of non-overlapping CCEs. On the other hand, when the UE is configured with the DRX operation, if the UE is instructed to perform operations related to power saving within the DRX active time, there may be many benefits to the power consumption of the UE. To this end, the BS may indicate to the LTE the operations related to power saving based on DCI format 2_6, which is newly introduced in Rel-16.

According to power saving technologies of the Rel-16 NR system, when DRX operation is performed, whether the UE wakes up every DRX cycle may be notified to the UE based on DCI format 2_6. Table 8 shows DCI format 2_6 defined in TS 38.212.

[Table 8]

| |
|---|
| 7.3.1.3.7                                                                                    Format 2_6 |
| DCI format 2_6 is used for notifying the power saving information outside DRX Active Time for one or more UEs. |
| The following information is transmitted by means of the DCI format 2_6 with CRC scrambled by PS-RNTI: |
| - block number 1, block number 2,..., block number N |
| where the starting position of a block is determined by the parameter ps-PositionDCI-2-6 provided by higher layers for the UE configured with the block. |
| If the UE is configured with higher layer parameter PS-RNTI and dci-Format2-6, one block is configured for the UE by higher layers, with the following fields defined for the block: |

(continued)

| 7.3.1.3.7 Format 2_6 |
|---|
| - Wake-up indication - 1 bit<br>- SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group.<br>The size of DCI format 2_6 is indicated by the higher layer parameter sizeDCI-2-6, according to Clause 10.3 of TS 38.213. |

Referring to FIG. 14, a monitoring occasion for DCI format 2_6 may be determined by ps-Offset indicated by the network and a time gap reported by the UE. In this case, the time gap reported by the LTE may be interpreted as a preparation period necessary for an operation after the UE wakes up.

Referring to FIG. 14, the network may provide the UE with a search space (SS) set configuration capable of monitoring DCI format 2_6. According to the corresponding SS set configuration, DCI format 2_6 may be monitored in 3 consecutive slots (i.e., the duration) at the monitoring periodicity interval.

In the DRX configuration, a monitoring window for monitoring DCI format 2_6 may be determined by the start time of the DRX cycle (e.g., a point where the on-duration timer starts) and ps-Offset configured by the network. In addition, PDCCH monitoring may not be required in the time gap reported by the LTE. Consequently, an SS set monitoring occasion on which the UE actually performs monitoring may be determined as a first full duration (i.e., actual monitoring occasions of FIG. 14) within the monitoring window.

Hereinafter, methods of receiving DCI format 2_6 within the DRX active time according to the present disclosure will be described based on the above description.

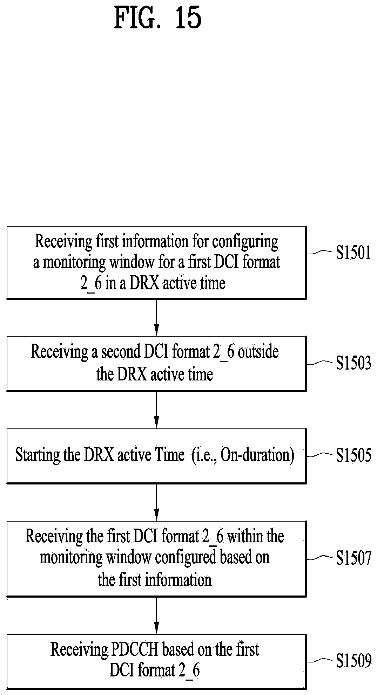

Before describing embodiments in detail, overall operation processes of the UE and BS according to the embodiments of the present disclosure will be reviewed with reference to FIGS. 15 to 17.

FIG. 15 is a diagram for explaining the operation process of the LTE according to embodiments of the present disclosure.

Referring to FIG. 15, the LTE may receive first information for configuring a monitoring window for first DCI format 2_6 within the DRX active time (S 1501). In this case, the first information may be received through higher layer signaling such as RRC signaling and/or dynamic signaling such as downlink control information (DCI).

The first information may include parameters for configuring the monitoring window for first DCI format 2_6. For example, information on at least one of an offset, a duration, a periodicity, and a time gap may be included. The LTE may receive the offset, duration, periodicity, and time gap through common signaling, but the UE may receive the offset, duration, periodicity, and time gap through different signaling.

Specifically, methods of configuring the monitoring window for DCI format 2_6 based on the parameters included in the above-described first information may be based on "Embodiment #1" and "Embodiment #3".

In addition, methods of monitoring DCI format 2_6 within the corresponding monitoring window may be based on "Embodiment #2".

Further, methods of configuring/using the time gap included in the above-described first information may be based on "Embodiment #4".

Additionally, the LTE may receive information on the offset, duration, and periodicity for configuring an SS set for monitoring DCI format 2_6 separately from or together with the first information.

In this case, methods of configuring the SS Set may be based on "Embodiment #5".

The UE may receive second DCI format 2_6 outside the DRX active time (S1503). Second DCI format 2_6 may include a WUS. That is, the UE may start the DRX active time (e.g., On Duration) based on the WUS included in second DCI format 2_6 (S1505).

The LTE may receive first DCI format 2_6 within the monitoring window for monitoring first DCI format 2_6 within the DRX active time based on the above-described first information (S1507). In other words, the monitoring window may be configured based on "Embodiment #1" and/or "Embodiment #3". First DCI format 2_6 may be received based on "Embodiment #2". In addition, the SS set may be configured within the DRX active time based on "Embodiment #5".

Based on first DCI format 2_6, the UE may monitor and receive a PDCCH after the time gap based on "Embodiment #4" (S1509). In this case, first DCI format 2_6 may include information on an SS set, PDCCH occasion, CORESET and/or BWP to be monitored by the UE to receive scheduling DCI (e.g., DL assignment and/or UL grant) after the time gap.

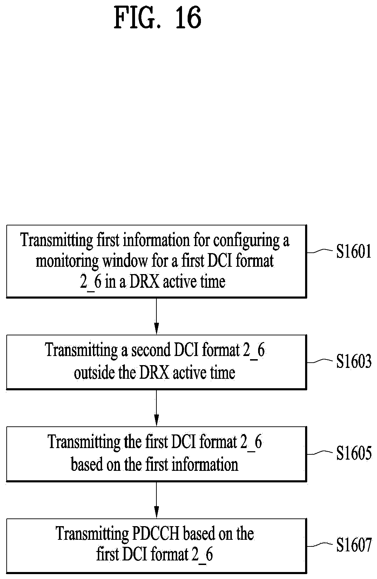

FIG. 16 is a diagram for explaining the operation process of the BS according to embodiments of the present disclosure.

Referring to FIG. 16, the BS may transmit first information for configuring a monitoring window for first DCI format 2_6 within the DRX active time (S1601). In this case, the first information may be transmitted through higher layer signaling such as RRC signaling and/or dynamic signaling such as DCI.

The first information may include parameters for configuring the monitoring window for first DCI format 2_6. For example, information on at least one of an offset, a duration, a periodicity, and a time gap may be included. The BS may transmit the offset, duration, periodicity, and time gap through common signaling, but the BS may transmit the offset, duration, periodicity, and time gap through different signaling.

Specifically, methods of configuring the monitoring window for DCI format 2_6 based on the parameters included in the above-described first information may be based on "Embodiment #1" and "Embodiment #3".

In addition, methods of transmitting DCI format 2_6 within the corresponding monitoring window may be based on "Embodiment #2".

Further, methods of configuring/using the time gap included in the above-described first information may be based on "Embodiment #4".

Additionally, the BS may transmit information on the offset, duration, and periodicity for configuring an SS set for monitoring DCI format 2_6 separately from or together with the first information.

In this case, methods of configuring the SS Set may be based on "Embodiment #5".

The BS may transmit second DCI format 2_6 outside the DRX active time (S1603). Second DCI format 2_6 may include a WUS. That is, the BS may instruct the UE to start the DRX active time (e.g., On Duration) based on the WUS included in second DCI format 2_6.

The BS may transmit first DCI format 2_6 within the monitoring window for monitoring first DCI format 2_6 within the DRX active time based on the above-described first information (S1605). In other words, the monitoring window may be configured based on "Embodiment #1" and/or "Embodiment #3". First DCI format 2_6 may be transmitted based on "Embodiment #2". In addition, the SS set may be configured within the DRX active time based on "Embodiment #5".

Based on first DCI format 2_6, the BS may transmit a PDCCH after the time gap based on "Embodiment #4" (S1607). In this case, first DCI format 2_6 may include information on an SS set, PDCCH occasion, CORESET and/or BWP to be monitored by the UE to receive scheduling DCI (e.g., DL assignment and/or UL grant) after the time gap.

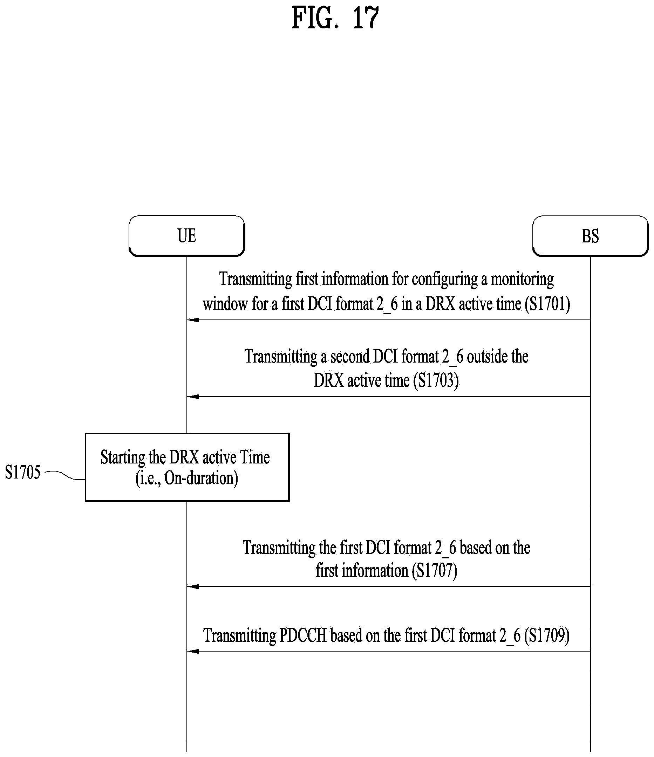

FIG. 17 is a diagram for explaining the operation processes of the LTE and BS according to embodiments of the present disclosure.

Referring to FIG. 17, the BS may transmit first information for configuring a monitoring window for first DCI format 2_6 to the UE within the DRX active time (S1701). In this case, the first information may be transmitted through higher layer signaling such as RRC signaling and/or dynamic signaling such as DCI.

The first information may include parameters for configuring the monitoring window for first DCI format 2_6. For example, information on at least one of an offset, a duration, a periodicity, and a time gap may be included. The BS may transmit the offset, duration, periodicity, and time gap through common signaling, but the BS may transmit the offset, duration, periodicity, and time gap through different signaling.

Specifically, methods of configuring the monitoring window for DCI format 2_6 based on the parameters included in the above-described first information may be based on "Embodiment #1" and "Embodiment #3".

In addition, methods of transmitting DCI format 2_6 within the corresponding monitoring window may be based on "Embodiment #2".

Further, methods of configuring/using the time gap included in the above-described first information may be based on "Embodiment #4".

Additionally, the BS may transmit information on the offset, duration, and periodicity for configuring an SS set for monitoring DCI format 2_6 separately from or together with the first information.

In this case, methods of configuring the SS Set may be based on "Embodiment #5".

The BS may transmit second DCI format 2_6 to the UE outside the DRX active time (S1703). Second DCI format 2_6 may include a WUS.

The UE may start the DRX active time (e.g., On Duration) based on the WUS included in received second DCI format 2_6 (S1705).

The BS may transmit first DCI format 2_6 to the LTE within the monitoring window for monitoring first DCI format 2_6 within the DRX active time based on the above-described first information (S1707). In other words, the monitoring window may be configured based on "Embodiment #1" and/or "Embodiment #3". First DCI format 2_6 may be transmitted based on "Embodiment #2". In addition, the SS set may be configured within the DRX active time based on "Embodiment #5".

Based on first DCI format 2_6, the BS may transmit a PDCCH to the UE after the time gap based on "Embodiment #4" (S1709). In this case, first DCI format 2_6 may include information on an SS set, PDCCH occasion, CORESET and/or BWP to be monitored by the UE to receive scheduling DCI (e.g., DL assignment and/or UL grant) after the time gap.

Hereinafter, the embodiments of the present disclosure will be described. Although "Embodiment #1" to "Embodiment #5" described later may be implemented independently, one or more of the embodiments may be implemented in combination. For example, a monitoring window may be configured according to any one of the embodiments of "Embodiment #1", and DCI format 2_6 may be received within the corresponding monitoring window according to any one of the embodiments of "Embodiment #2". In addition, the monitoring window may be configured according to any one of the embodiments of "Embodiment #1", and scheduling DCI (e.g., DL assignment or UL Grant) may be monitored according to any one of the embodiments of "Embodiment #4".

**1. Embodiment #1: Method of configuring monitoring window for DCI Format 2_6 within DRX active time**

Except for SS set monitoring occasions where the LTE actually performs monitoring, the LTE may not monitor other SS set monitoring occasions (gray dotted line arrows in FIG. 14) where DCI format 2_6 may be transmitted. That is, referring to FIG. 14, if the UE receives DCI format 2_6 on actual monitoring occasions, the UE may not monitor DCI format 2_6 on SS set monitoring occasions located after the actual monitoring occasions even if the SS set monitoring occasions are configured within a monitoring window.

In the present disclosure, the monitoring window may be defined within the DRX active time after the DRX on-duration timer starts, thereby allowing the UE to receive DCI format 2_6 from the network. For example, the present disclosure proposes a method for the network to additionally indicate information on power saving within the DRX active time through DCI format 2_6, independently of a WUS through DCI format 2_6 outside the DRX active time.

Basically, since the embodiments of the present disclosure are related to operations within the DRX active time, the methods proposed in the present disclosure may be understood as being applied when the UE is instructed to wake up through a WUS and then wakes up. However, the present disclosure is not limited thereto.

The monitoring window within the DRX active time is to select occasions to be actually monitored by the LTE among SS set monitoring occasions where blind decoding of DCI format 2_6 is possible.

Therefore, the monitoring window within the DRX active time may be configured by the BS separately from a monitoring window outside the DRX active time defined by ps-Offset and the time gap. For example, a monitoring window may be defined in the time domain such that the UE may monitor only one or more SS sets for DCI format 2_6 within the DRX active time. The LTE may actually perform various operations within the defined monitoring window, and the present disclosure may not specifically limit the operations.

For example, the monitoring window within the DRX active time may be defined by three variables: an offset parameter for indicating the starting point in the time domain; a duration parameter for indicating the length of the monitoring window; and a periodicity parameter for indicating a periodicity at which the monitoring window is repeated. The periodicity of the monitoring window may be defined/configured to be effective only within the DRX active time. Hereinafter, three methods for defining the offset are disclosed in "Embodiment #1", but the present disclosure is not limited thereto.

**(1) Embodiment #1-1: Offset from starting point of on-duration timer**

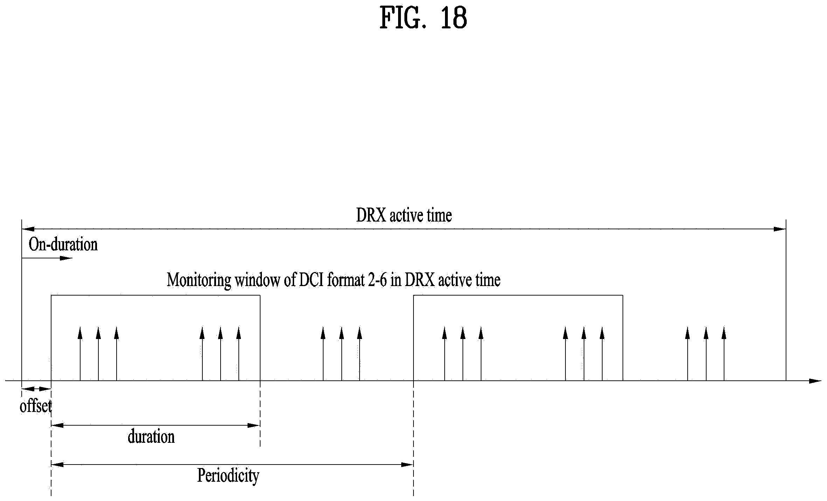

Referring to FIG. 18, the duration of a monitoring window may be indicated/configured by the number of slots or subframes from the starting point to the ending point of the monitoring window. The periodicity of the monitoring window may be indicated/configured by the number of slots or subframes from the starting point of the n-th monitoring window to the starting point of the (n+1)-th monitoring window within the DRX active time. Alternatively, the periodicity of the monitoring window may be indicated/configured by the number of slots or subframes from the ending point of the n-th monitoring window to the ending point of the (n+1)-th monitoring window within the DRX active time. The periodicity of the monitoring window may be valid only within the DRX active time and may not be defined or counted outside the DRX active time. Alternatively, the periodicity of the monitoring window may be valid only within the DRX active time and may not be indicated/configured outside the DRX active time.

An offset for indicating the starting point of the first monitoring window within the DRX active time may be determined based on the starting point of the DRX active time. For example, as shown in FIG. 18, the offset may be defined by the number of slots or subframes from the starting point of the DRX active time, for example, from the time when the on-duration timer starts.

In FIG. 18, the upward pointing arrow means an SS set monitoring occasion as shown in FIG. 14. For an SS set monitoring occasion within the monitoring window defined by the present disclosure, the UE may attempt to decode/detect PDCCH candidates included in the SS set (hereinafter referred to as "SS set monitoring"). The UE may not perform SS set monitoring on SS set monitoring occasions outside the monitoring window. In other words, it may not be expected that the LTE will perform the SS set monitoring on SS set monitoring occasions outside the monitoring window.

**(2) Embodiment #1-2: Offset from starting point of frame**

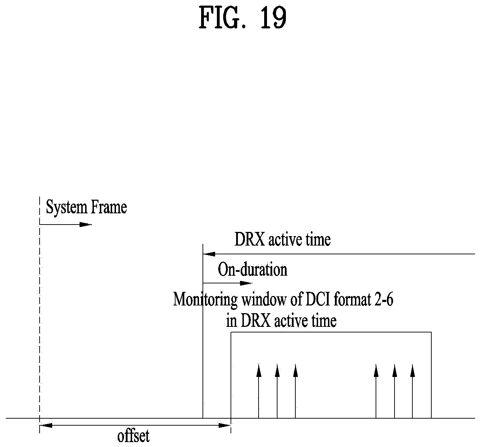

Referring to FIG. 19, an offset may be determined based on the starting point of a system frame. For example, the offset may be defined as the number of slots or subframes from the starting point of the system frame.

When a monitoring window is configured according to Embodiment #1-2, the duration parameter and periodicity parameter may be used together with the offset parameter. That is, referring to FIG. 19, the monitoring window may be configured based on the offset parameter, duration parameter, and periodicity parameter.

In addition, the definitions of the duration and periodicity in the configuration of the monitoring window according to Embodiment #1-2 may be the same as the definitions of the duration and periodicity described in Embodiment #1-1.

On the other hand, when the starting point of the monitoring window by the offset parameter in Embodiment #1-2 is not configured within the DRX active time (e.g., after the starting point of the on-duration), the starting point of the monitoring window may be the same as the starting point of the DRX active time (e.g., the starting point of the on-duration). In other words, when the offset is applied based on the system frame, if the application time is before the starting point of the DRX active time, the starting point of the monitoring window may be the same as the starting point of the DRX active time.

**(3) Embodiment #1-3: Offset from first SS set monitoring occasion by SS set configuration**

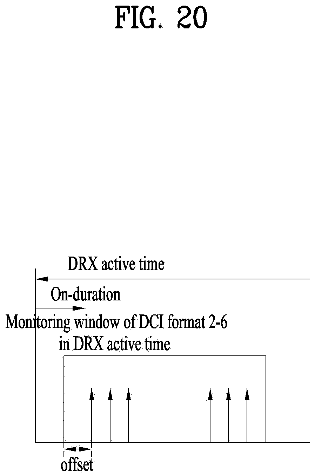

Referring to FIG. 20, an offset may be determined based on the first SS set monitoring occasion within the DRX active time. For example, the offset may be defined as the number of slots or subframes from the starting point of the first SS set monitoring occasion within the DRX active time.

When a monitoring window is configured according to Embodiment #1-3, the duration parameter and periodicity parameter may be used together with the offset parameter. That is, referring to FIG. 20, the monitoring window may be configured based on the offset parameter, duration parameter, and periodicity parameter.

In addition, the definitions of the duration and periodicity in the configuration of the monitoring window according to Embodiment #1-3 may be the same as the definitions of the duration and periodicity described in Embodiment #1-1.

**(4) Embodiment #1-4: Whether monitoring is performed when SS set monitoring occasion partially overlap with monitoring window**

When a monitoring window is configured as in Embodiment #1-1 to Embodiment #1-3 described above, various operations of the UE/BS may be additionally defined.

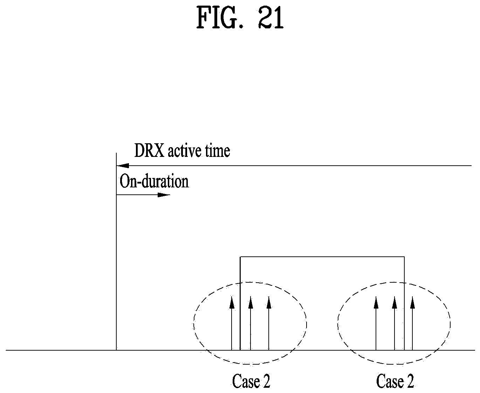

On the other hand, as shown in FIG. 21, SS set monitoring occasions within a duration by an SS set configuration may partially overlap with a monitoring window, instead of completely overlapping with the monitoring window.

For example, referring to FIG. 21, the following cases may be considered: Case 1 in which the first slot of an SS set monitoring occasion does not overlap with the monitoring window; and Case 2 in which the last slot of an SS set monitoring occasion does not overlap with the monitoring window.

For each case, whether the LTE performs PDCCH monitoring (e.g., monitoring of DCI format 2_6) may be determined by an additional indication or a predetermined rule, but the present disclosure is not limited to the indication or rule.

For example, assuming that the LTE operates in the same way as in WUS monitoring of the Rel-16 NR system, in the situation shown in FIG. 21, the LTE may operate as follows.

In Case 1 where the first SS set monitoring occasion is outside the monitoring window, the UE may perform no SS set monitoring. On the other hand, in Case 2 where the last SS set monitoring occasion is outside the monitoring window, the LTE may perform SS set monitoring. For example, when an occasion in the first slot among SS set monitoring occasions, which may be defined in up to three slots within a monitoring window, overlaps with the monitoring window, the LTE may be configured to monitor DCI format 2_6.

As another example, since the UE needs to quickly monitor DCI format 2_6 within the DRX active time, the LTE may be configured to perform monitoring on all occasions if only some of the occasions overlap with the monitoring window. In this case, even if the first occasion does not overlap with the monitoring window as in Case 1, the UE may be configured to monitor DCI format 2_6 on all consecutive occasions.

**2. Embodiment #2: Method of receiving DCI format 2_6 within DRX active time**

**(1) Embodiment #2-1: Reception of DCI format 2_6 on monitoring occasion within first monitoring window**

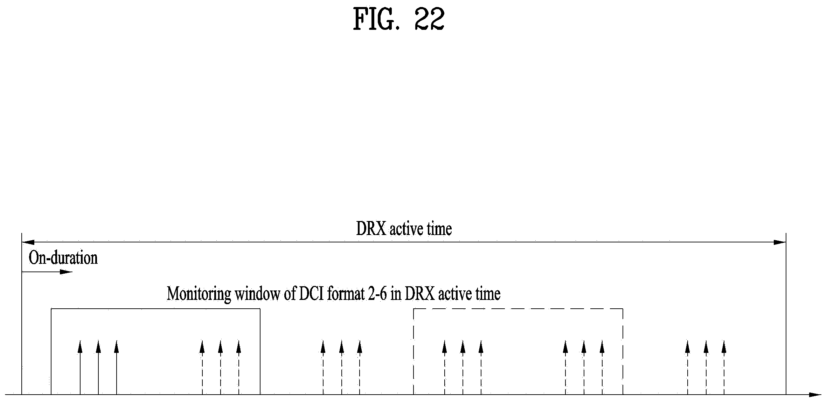

Referring to FIG. 22, when the LTE starts the DRX active time and receives DCI format 2_6 on one SS set monitoring occasion in the first monitoring window, the LTE may not perform monitoring on other SS set monitoring occasions within the monitoring window as in the WUS. In other words, the UE may be expected not to perform monitoring on the other SS set monitoring occasions within the monitoring window.

That is, when the UE starts the DRX active time and detects DCI format 2_6 on the first SS set monitoring occasion in the first monitoring window, the LTE may not monitor DCI format 2_6 on SS set monitoring occasions located after the first SS set monitoring occasion within the first monitoring window.

However, if the LTE fails to detect DCI format 2_6 on the first SS set monitoring occasion in the first monitoring window, the UE may monitor DCI format 2_6 on another SS set monitoring occasion within the first monitoring window.

Basically, the LTE may sequentially perform monitoring on SS set monitoring occasions in the first monitoring window. If the UE receives DCI format 2_6 on a specific SS set monitoring occasion, the LTE may not perform monitoring on SS set monitoring occasions located after the corresponding specific SS set monitoring occasion within the first monitoring window.

In addition, if the LTE receives DCI format 2_6 in an SS set monitoring occasion within the first monitoring window, the LTE may not monitor DCI format 2_6 in monitoring windows after the first monitoring window. In other words, if the LTE receives DCI format 2_6 within the first monitoring window, the LTE may not monitor DCI format 2_6 from the second monitoring window.

However, if the LTE fails to receive DCI format 2_6 in all SS set monitoring occasions within the first monitoring window, the LTE may perform monitoring on SS set monitoring occasions within the second monitoring window in the same manner as described above.

That is, in Embodiment #2-1, the LTE may perform DCI monitoring in chronological order of monitoring windows and SS set monitoring occasions included in each monitoring window. If the UE receives DCI format 2_6 on any one SS set monitoring occasion, the UE may not monitor DCI format 2_6 on SS set monitoring occasions after the SS set monitoring occasion in which DCI format 2_6 is received within the corresponding DRX active time.

The same operations to be performed within the corresponding DRX active time after the UE receives DCI format 2_6 may be indicated to the UE in DCI format 2_6. For example, if the UE is instructed to monitor only some SS sets among a plurality of SS sets, only some CORESETs among a plurality of CORESETs, only some cells among a plurality of cells, and/or some BWPs among a plurality of BWPs through DCI format 2_6, the LTE may monitor DCI (e.g., DL assignment and/or UL grant) within the corresponding DRX active time based on the corresponding indication.

In other words, according to Embodiment #2-1, the LTE may be configured to skip monitoring in monitoring windows after the first monitoring window in which DCI format 2_6 is received.

**(2) Embodiment #2-2: Method of receiving DCI format 2_6 on multiple monitoring occasions within monitoring window**

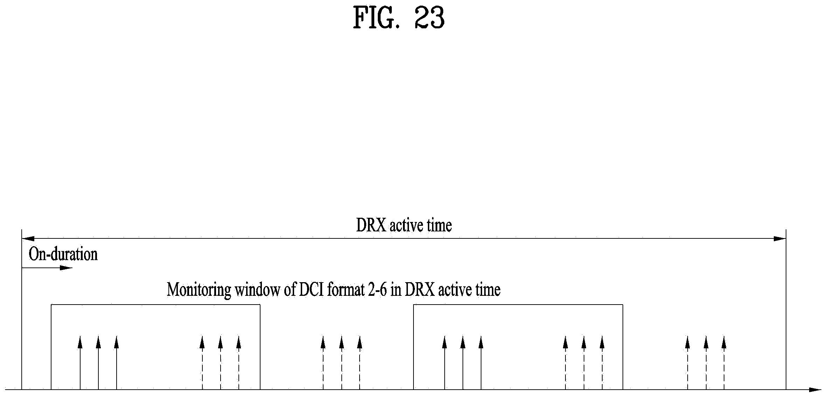

Referring to FIG. 23, when the LTE starts the DRX active time and receives DCI format 2_6 on one SS set monitoring occasion within the first monitoring window, the UE may not monitor DCI format 2_6 on next SS set monitoring occasions within the monitoring window. In other words, if the LTE receives DCI format 2_6 on one SS set monitoring occasion within the monitoring window, the UE may be expected to not to perform monitoring on SS set monitoring occasions after the one SS set monitoring occasion among a plurality of SS set monitoring occasions configured within the corresponding monitoring window.

For example, the LTE may be configured to attempt blind decoding of DCI format 2_6 in each monitoring windows, which are periodically configured within the DRX active time.

For example, referring to FIG. 23, if the UE receives DCI format 2_6 on the first SS set monitoring occasion in the first monitoring window, the LTE may not monitor DCI format 2_6 from an SS set monitoring occasion (i.e., the second SS set monitoring occasion) after the first SS set monitoring occasion within the first monitoring window. However, if the UE does not receive DCI format 2_6 on the first SS set monitoring occasion within the first monitoring window, the LTE may monitor DCI format 2_6 on the second SS set monitoring occasion.

Referring to FIG. 23, even if the LTE receives DCI format 2_6 in the first monitoring window, the UE may monitor DCI format 2_6 in the second monitoring window. In this case, if the UE receives DCI format 2_6 on the first SS set monitoring occasion within the second monitoring window, the UE may not monitor DCI format 2_6 from the second SS set monitoring occasion within the second monitoring window.

The difference between Embodiment #2-1 and Embodiment #2-2 is as follows. In Embodiment #2-1, if the LTE receives DCI format 2_6 on a specific SS set monitoring occasion, the UE may no longer monitor DCI format 2_6 within the DRX active time including the specific SS set monitoring occasion. However, in Embodiment #2-2, if the UE receives DCI format 2_6 on a specific set monitoring occasion, the UE may no longer monitor DCI format 2_6 within a monitoring window including the specific SS set monitoring occasion, but the UE may monitor DCI format 2_6 again in a next monitoring window within the same DRX active time.

That is, according to Embodiment #2-1, the UE may receive DCI format 2_6 once within one DRX active time. According to Embodiment #2-2, the LTE may receive DCI format 2_6 once for each of a plurality of monitoring windows included in one DRX active time.

Operations to be performed after the UE receives DCI format 2_6 and before the UE receives next DCI format 2_6 within the corresponding DRX active time may be indicated through corresponding DCI format 2_6.

For example, when the UE is instructed to monitor only some SS sets among a plurality of SS sets, only some CORESETs among a plurality of CORESETs, only some cells among a plurality of cells, and/or only some BWPs among a plurality of BWPs through DCI format 2_6, the LTE may monitor DCI (e.g., DL assignment and/or LTL grant) based on the indication until the LTE receives next DCI format 2_6.

When the UE receives DCI format 2_6 within one monitoring window and receives different DCI format 2_6 within a next monitoring window, the LTE may be configured to override operations indicated by previously received DCI format 2_6 with operations indicated by different DCI format 2_6.

### (3) Embodiment #2-3: Method of receiving DCI format 2_6 on monitoring occasion not included in first monitoring window

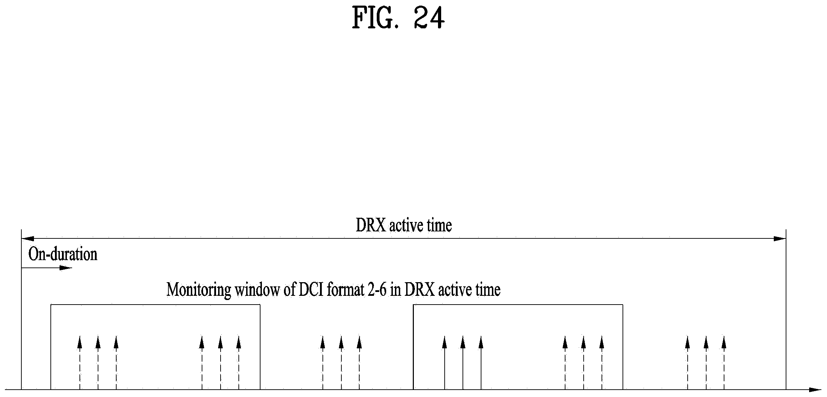

Referring to FIG. 24, the LTE may receive DCI format 2_6 within a monitoring window other than the first monitoring window defined within the DRX active time.

For example, as described in Embodiment #2-1, when the UE fails to detect DCI format 2_6 within the first monitoring window, the LTE may receive DCI format 2_6 by monitoring DCI format 2_6 in monitoring windows after the first monitoring window.

Alternatively, in a situation such as Embodiment #2-2, although the LTE attempts to monitor DCI format 2_6 in each monitoring window, the LTE may not detect DCI format 2_6 in the first monitoring window and receive DCI format 2_6 in the second monitoring window.

Alternatively, when a time gap, which is the duration in which monitoring of DCI format 2_6 is not allowed, overlaps with at least part of the first monitoring window after the on-duration starts, the UE may not be able to monitor DCI format 2_6 in the first monitoring window.

Alternatively, the BS may instruct the UE not to monitor DCI format 2_6 in the first monitoring window through RRC signaling and/or in DCI.

In this case, the LTE may perform normal DRX operation (i.e., default DRX operation) until the LTE receives DCI format 2_6. That is, the LTE may perform the default DRX operation, which is predetermined or preconfigured by the BS, until reception of DCI format 2_6. In addition, based on Embodiment #2-1, the LTE may perform operations indicated by DCI format 2_6 during the rest of the DRX active time from the time of receiving DCI format 2_6 within the corresponding DRX active time.

Alternatively, based on Embodiment #2-2, the UE may perform operations indicated by corresponding DCI format 2_6 from the time of receiving DCI format 2_6 within the corresponding DRX active time until receiving next DCI format 2_6.

In this case, the operations indicated by DCI format 2_6 may be interpreted to mean that when the LTE is instructed to monitor only some SS sets among a plurality of SS sets, only some CORESETs among a plurality of CORESETs, only some cells among a plurality of cells, and/or only some BWPs among a plurality of BWPs through DCI format 2_6, the UE may monitor DCI (e.g., DL assignment and/or UL grant) within the corresponding DRX active time based on the corresponding indication.

### (4) Embodiment #2-4: Method of monitoring only DCI format 2_6 within DRX active time

In Embodiment #2-1 to Embodiment #2-3, the BS may instruct/configure the LTE to monitor only DCI format 2_6 within the DRX active time.

In this case, since the UE does not monitor other SS sets except for an SS set for DCI format 2_6, power saving may be achieved.

When the network (or BS) desires to transmit DCI other than DCI format 2_6 to the UE within the DRX active time, the network (or BS) may inform the UE of other SS sets to be monitored to transmit and receive other DCI through DCI format 2_6.

For example, when the network desires to transmit DL or UL scheduling DCI within the DRX active time, if the network informs the UE of an SS set in which the scheduling DCI is to be transmitted through DCI format 2_6, the UE may monitor the corresponding SS set and receive the corresponding scheduling DCI.

When the LTE receives DL or LTL scheduling DCI, the LTE may perform normal DRX operation according to the DRX mechanism described in TS 38.331. For example, when the UE receives DL or UL scheduling DCI, the UE may start an inactive timer.

**3. Embodiment #3: Method of monitoring DCI format 2_6 from starting point of on-duration timer**

In Embodiment #3, a method of configuring other monitoring windows will be described, instead of defining a monitoring window based on the offset parameter, duration parameter, and periodicity parameter as in Embodiment #1.

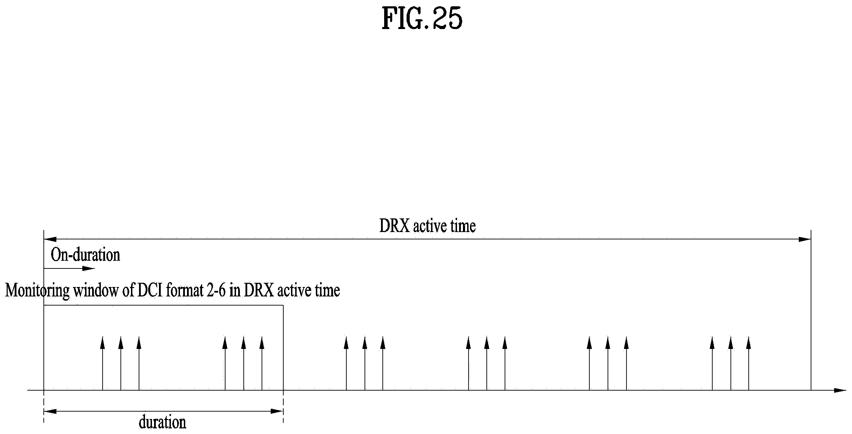

For example, as shown in FIG. 25, the LTE may be configured/defined/instructed to monitor DCI format 2_6 during an arbitrary duration based on the starting point of the on-duration timer. In this case, the duration may be set to an arbitrary number of slots or subframes.

That is, in the example of FIG. 25, only the duration parameter may be indicated to the UE, and the offset parameter and periodicity parameters may not be indicated to the UE.

Therefore, since only one monitoring window may exist within the DRX active time and the monitoring window may start at the starting point of the on-duration, the offset may be zero based on Embodiment #1-1.

However, even in Embodiment #3, the network (or BS) may configure a periodicity to configure a plurality of monitoring windows within the DRX active time. In this case, the BS may indicate the duration parameter and periodicity parameter to the UE without providing the offset parameter.

PDCCH monitoring in the monitoring window configured according to Embodiment #3 may also be performed in the same way as when monitoring is performed on SS set monitoring occasions described above in Embodiment #1-1 to Embodiment #1-4. However, when the monitoring window is configured as in Embodiment #3, the BS may separately instruct the UE to perform the PDDCH monitoring in a different way from Embodiment #1-1 to Embodiment #1-4.

Embodiment #3 may correspond to a case in which the monitoring window is configured to have an offset of '0' in Embodiment #1-1 to Embodiment #1-3.

**4. Embodiment #4: Method of configuring time gap**

In the current NR system, even for a monitoring window for receiving DCI format 2_6 including a WUS outside the DRX active time, PDCCH monitoring may not be required in a time gap reported by the UE.

In this case, the time gap may also be referred to as a preparation time for the LTE to transmit and receive signals within the DRX active time, which may also be related to the number of SS sets that the LTE needs to monitor.

Therefore, in embodiments of the present disclosure, the time gap related to monitoring of DCI format 2_6 within the DRX active time may be defined different from that in the prior art. According to the embodiments of the present disclosure, assuming that the UE obtains power saving information such as information on SS set IDs to be monitored when the UE monitors DCI format 2_6 within the DRX active time, the time gap for the LTE to prepare for monitoring of SS sets corresponding to the SS set ID information may be required even within the DRX active time, similarly to the current NR system.

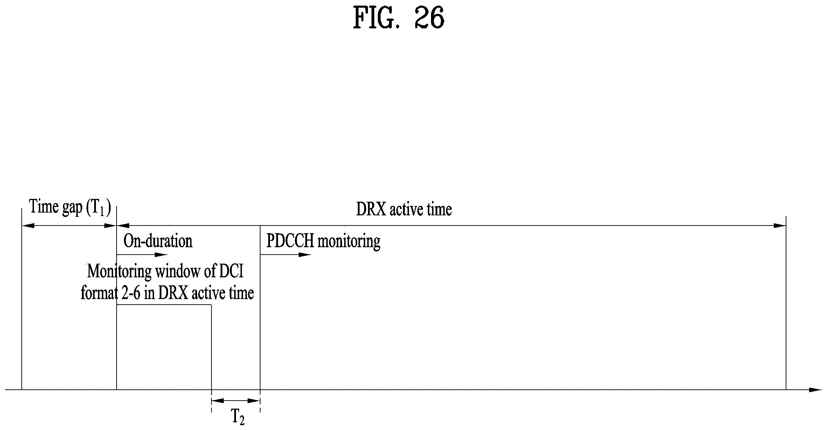

Referring to FIG. 26, an existing time gap defined outside the DRX active time is denoted by T, a time gap outside the DRX active time, which is changed according to the embodiments of the present disclosure, is denoted by $T_1$, and a time gap required for PDCCH monitoring after DCI format 2_6 is received within the DRX active time or after a monitoring window in which DCI format 2_6 is received is terminated within the DRX active time is referred to as $T_2$.

In this case, T may be regarded as a time required for the UE to complete all preparations for performing transmission and reception within the DRX active time. $T_1$ may be regarded as a time required to prepare for monitoring only DCI format 2_6. $T_2$ may be regarded as a time required to prepare for monitoring other DCI (e.g., DL assignment or UL grant) except for DCI format 2_6, that is, a time to prepare for monitoring other DCI except for DCI format 2_6.

Therefore, a relationship of $T <= T_1 + T_2$ may be established. In this case, the following two cases may be considered for operations of the UE.

**(1) Embodiment #4-1**

The LTE may receive DCI format 2_6 outside the DRX active time and operate the on-duration timer based on DCI format 2_6 in the same way as when the WUS operates. In addition, the UE may prepare for monitoring of all SS sets while starting the DRX active time. Thereafter, the LTE may monitor DCI format 2_6 based on a monitoring window that starts simultaneously with the on-duration timer or based on a monitoring window within the DRX active time that starts by applying a prescribed offset (e.g., monitoring window according to "Embodiment #1" or "Embodiment #3"). Then, the LTE may obtain power saving information from received DCI format 2_6.

Information on SS sets that the UE does not need to monitor may be provided to the UE by the obtained power saving information. In addition, the UE may turn off a receiver associated with SS sets that does not need to be monitored based on the corresponding information (for example, the UE turns off monitoring of the SS sets that does not need to be monitored). Therefore, in Embodiment #4-1, $T_1 = T$ and $T_2 = 0$.

Thus, Embodiment #4-1 may be regarded as the same as the conventional WUS operation in terms of the time gap, but only an operation in which the UE turns off the receiver that the UE does not require (i.e., receiver that is not required for SS set monitoring) may be added. Therefore, the UE operation according to Embodiment #4-1 may be allowed even without modification of the specifications for the time gap of the current NR system

**(2) Embodiment #4-2**

The LTE may receive DCI format 2_6 outside the DRX active time and operate the on-duration timer based on DCI format 2_6 in the same way as when the WUS operates. In this case, the LTE may prepare for monitoring only SS sets required to monitor DCI format 2_6 and minimum additional SS sets while starting the DRX active time. In other words, the UE may turn on a receiver for monitoring only the SS sets for monitoring DCI format 2_6 and the minimum additional SS sets within the DRX active time, and the UE may turn off the remaining receivers. If the minimum additional SS sets are not required, the UE may turn on only the receiver associated with the SS sets for monitoring DCI format 2_6 within the DRX active time.

In this case, a relationship of $T_1 < T$ may be established because the UE does not need to turn on all receivers of the UE. That is, $T_1$ may have a value smaller than $T$. Thereafter, by monitoring DCI format 2_6 within the DRX active time, the UE may be configured with SS sets to be monitored during the DRX active time or SS sets to be monitored until receiving next DCI format 2_6.

In this case, since $T_2$ is the time for the UE to prepare for monitoring only the indicated SS sets rather than all SS sets, $T < T_1 + T_2$ may be satisfied. Thus, the number of slots for performing PDCCH monitoring may decrease, compared to the time gap configured for reception of DCI format 2_6 including the WUS outside the DRX active time, thereby reducing the delay time (e.g., time gap).

In the prior art, a different time gap may be configured for each SCS. For example, a short time gap with value 1 such as 1 or 2 slots may be defined, and a long time gap with value 2 such as 3 to 24 slots may be defined.

In Embodiment #4-2, if $T_2$ is set shorter than or equal to the conventional time gap. For value 1, a minimum number of slots may be configured. Monitoring of all PDCCHs may not be required as in the operation in the conventional time gap.

For value 2, it may be required to monitor at least a preconfigured default SS set group for minimum monitoring. However, this is merely exemplary. That is, for value 1, the default SS set group may be monitored, and for value 2, monitoring of all PDCCHs may be skipped.

**5. Embodiment #5: Method of configuring and distinguishing SS sets for DCI format 2_6 inside DRX active time and SS sets for DCI format 2_6 outside DRX active time**

In 3GPP TS Rel-15 and Rel-16 specifications, the monitoring occasion of an SS set is determined based on a monitoring periodicity, offset, and duration. However, since the monitoring periodicity of a DRX cycle may be set different from the monitoring periodicity of the SS set, the monitoring occasion of DCI format 2_6 within the DRX active time proposed in the present disclosure may be irregularly formed with respect to the starting point of the on-duration timer.

Therefore, SS sets to be monitored by the UE (or minimum SS sets that the UE needs to monitor) within a monitoring window in the DRX active time proposed in the present disclosure may be separately indicated by the BS.

In this case, the duration and periodicity of an SS set configuration may be set identical to those of an SS set configuration for monitoring DCI format 2_6 including the WUS.

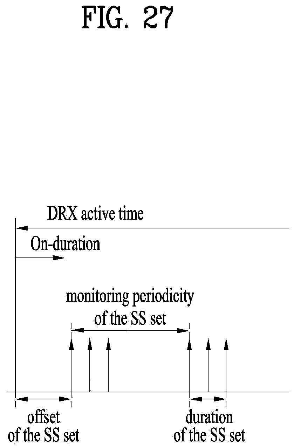

However, an offset for determining at what point in time within the DRX active time the UE starts monitoring may be configured separately with respect to the on-duration timer. Accordingly, as shown in FIG. 27, it is possible to prevent irregular formation of monitoring occasions with respect to the start of the on-duration. For example, DCI format 2_6 received outside the DRX active time may indicate that the LTE needs to start monitoring DCI format 2_6 after a certain period of time from the start of the on-duration.

This may be regarded as similar to Embodiment #1-1. However, in addition to the above method, an offset may be configured with respect to the frame starting point or monitoring window as in Embodiment #1-2 or Embodiment #1-3.

DCI format 2_6 monitored within the DRX active time proposed in the embodiments of the present disclosure may explicitly or implicitly indicate operations related to power saving. Therefore, the UE may be instructed/configured to monitor DCI format 2_6 with the highest priority within the DRX active time. In the Rel-15 and 16 specification, TS 38.213, when CORESETs with different TCI states (e.g., QCL-typeD) overlap with each other in the time domain, CORESETs to be monitored first may be defined as shown in [Table 9] below.

[Table 9]

| If a UE |
| --- |
| - is configured for single cell operation or for operation with carrier aggregation in a same frequency band, and |

(continued)

> - monitors PDCCH candidates in overlapping PDCCH monitoring occasions in multiple CORESETs that have same or different QCL-TypeD properties on active DL BWP(s) of one or more cells
>
> the UE monitors PDCCHs only in a CORESET, and in any other CORESET from the multiple CORESETs having same QCL-TypeD properties as the CORESET, on the active DL BWP of a cell from the one or more cells
>
> - the CORESET corresponds to the CSS set with the lowest index in the cell with the lowest index containing CSS, if any; otherwise, to the USS set with the lowest index in the cell with lowest index
>
> - the lowest USS set index is determined over all USS sets with at least one PDCCH candidate in overlapping PDCCH monitoring occasions
>
> - for the purpose of determining the CORESET, a SS/PBCH block is considered to have different QCL-TypeD properties than a CSI-RS
>
> - for the purpose of determining the CORESET, a first CSI-RS associated with a SS/PBCH block in a first cell and a second CSI-RS in a second cell that is also associated with the SS/PBCH block are assumed to have same QCL-TypeD properties
>
> - the allocation of non-overlapping CCEs and of PDCCH candidates for PDCCH monitoring is according to all search space sets associated with the multiple CORESETs on the active DL BWP(s) of the one or more cells
>
> - the number of active TCI states is determined from the multiple CORESETs

That is, it may be interpreted that the UE preferentially monitors a CORESET where the ID of an associated SS set is low. Therefore, as described in the present disclosure, when the LTE monitors DCI format 2_6 within the DRX active time, if a CORESET/SS set for monitoring DCI format 2_6 overlaps with a CORESET/SS set having a different TCI state (QCL-TypeD), the UE may be instructed/configured to first monitor the CORESET/SS set for DCI format 2_6.

To this end, the UE may be instructed/configured to consider the index of the CORESET/SS set (e.g., type-3 PDCCH CSS set) for monitoring DCI format 2_6 as the lowest index. Alternatively, the BS may allocate the lowest index to the CORESET/SS set (e.g., type-3 PDCCH CSS set) for monitoring DCI format 2_6.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

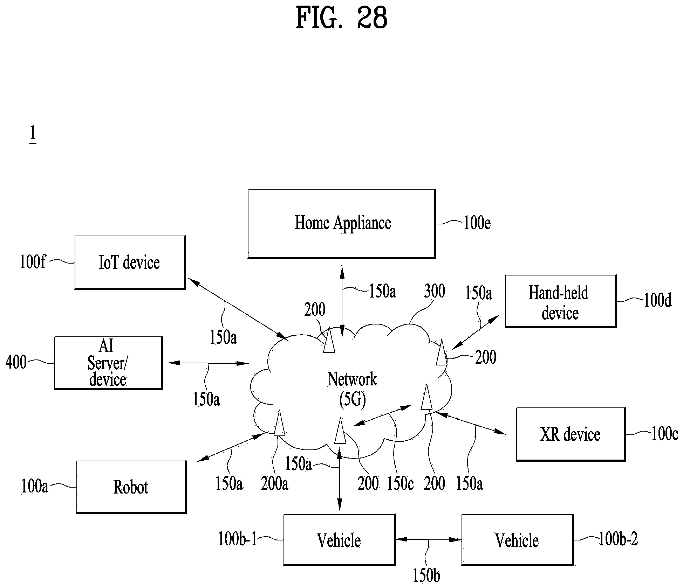

FIG. 28 illustrates a communication system 1 applied to the present disclosure.

Referring to FIG. 28, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5GNR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

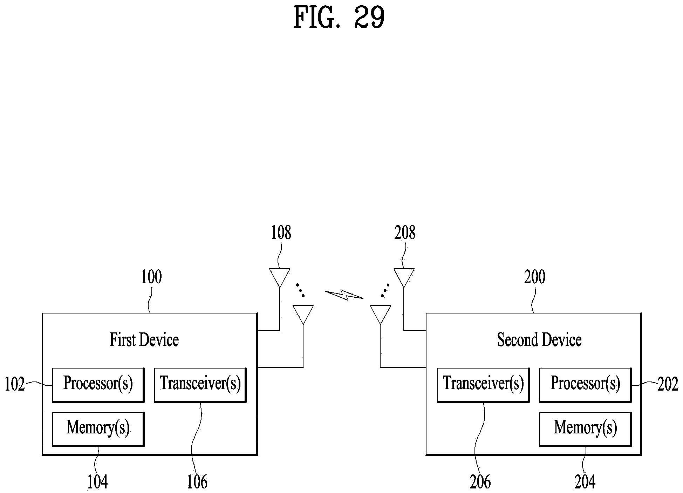

FIG. 29 illustrates wireless devices applicable to the present disclosure.

Referring to FIG. 29, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 28.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will now be described.

Although the following operations will be described based on a control operation of the processor(s) 102 in terms of the processor(s) 102, software code for performing such an operation may be stored in the memory 104. For example, in the present disclosure, the at least one memory(s) 104 may store instructions or programs as a computer-readable storage medium. The instructions or the programs may cause, when executed, at least one processor operably connected to the at least one memory to perform operations according to embodiments or implementations of the present disclosure, related to the following operations.

Specifically, the processor(s) 102 may control the transceiver(s) 106 to receive first information for configuring a monitoring window for first DCI format 2_6 within a DRX active time. In this case, the first information may be controlled to be received through higher layer signaling such as RRC signaling and/or dynamic signaling such as DCI.

The first information may include parameters for configuring the monitoring window for first DCI format 2_6. For example, the first information may include information on at least one of an offset, a duration, a periodicity, and a time gap. Although the processor(s) 102 may control the transceiver(s) 106 to receive the above-described offset, duration, periodicity, and time gap through common signaling, the processor(s) 102 may control the transceiver(s) 106 to receive the offset, duration, periodicity, and time gap through different signaling.

Specifically, the monitoring window for DCI format 2_6 may be configured by the parameters included in the above-described first information based on "Embodiment #1" and "Embodiment #3".

DCI format 2_6 may be monitored within the corresponding monitoring window based on "Embodiment #2".

The time gap included in the above-described first information may be configured/used based on "Embodiment 4".

The processor(s) 102 may control the transceiver(s) 106 to receive information on an offset, a duration, and a periodicity for configuring an SS set for monitoring DCI format 2_6 separately from or together with the first information.

In this case, the SS set may be configured based on "Embodiment #5".

The processor(s) 102 may control the transceiver(s) 106 to receive second DCI format 2_6 outside the DRX active time. Second DCI format 2_6 may include a WUS. That is, the processor(s) 102 may start the DRX active time (e.g., On Duration) based on the WUS included in second DCI format 2_6.

The processor(s) 102 may control the transceiver(s) 106 to receive first DCI format 2_6 within the monitoring window for monitoring first DCI format 2_6 within the DRX active time based on the above-described first information. In other words, the monitoring window may be configured based on "Embodiment #1" and/or "Embodiment 3". The transceiver(s) 106 may be controlled to receive first DCI format 2_6 based on "Embodiment #2". The SS set may be configured within the DRX active time based on "Embodiment #5".

Based on first DCI format 2_6, the processor(s) 102 may monitor a PDCCH after the time gap based on "Embodiment #4" and control the transceiver(s) 106 to receive the PDCCH. In this case, first DCI format 2_6 may include information on an SS set, PDCCH occasion, CORESET and/or BWP to be monitored by the UE to receive scheduling DCI (e.g., DL assignment and/or UL grant) after the time gap.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 200 and stored in the memory 204 of the second wireless device 200, according to an embodiment of the present disclosure will now be described.

Although the following operations will be described based on a control operation of the processor 202 in terms of the processor 202, software code for performing such an operation may be stored in the memory 204. For example, in the present disclosure, the at least one memory 204 may store instructions or programs as a computer-readable storage medium. The instructions or the programs may cause, when executed, at least one processor operably connected to the at least one memory to perform operations according to embodiments or implementations of the present disclosure, related to the following operations.

Specifically, the processor(s) 202 may control the transceiver(s) 206 to transmit first information for configuring a monitoring window for first DCI format 2_6 within a DRX active time. In this case, the first information may be controlled to be transmitted through higher layer signaling such as RRC signaling and/or dynamic signaling such as DCI.

The first information may include parameters for configuring the monitoring window for first DCI format 2_6. For example, the first information may include information on at least one of an offset, a duration, a periodicity, and a time gap. Although the processor(s) 202 may control the transceiver(s) 206 to transmit the above-described offset, duration, periodicity, and time gap through common signaling, the processor(s) 202 may control the transceiver(s) 206 to transmit the offset, duration, periodicity, and time gap through different signaling.

Specifically, the monitoring window for DCI format 2_6 may be configured by the parameters included in the above-described first information according to "Embodiment #1" and "Embodiment #3".

DCI format 2_6 may be transmitted within the corresponding monitoring window based on "Embodiment #2".

The time gap included in the above-described first information may be configured/used based on "Embodiment 4".

The processor(s) 202 may control the transceiver(s) 206 to transmit information on an offset, a duration, and a periodicity for configuring an SS set for monitoring DCI format 2_6 separately from or together with the first information.

In this case, the SS set may be configured based on "Embodiment #5".

The processor(s) 202 may control the transceiver(s) 206 to transmit second DCI format 2_6 outside the DRX active time. Second DCI format 2_6 may include a WUS. That is, the processor(s) 202 may start the DRX active time (e.g., On Duration) based on the WUS included in second DCI format 2_6. That is, the processor(s) 202 may control the transceiver(s) 206 to instruct the UE to start the DRX active time (e.g., On Duration) based on the WUS included in second DCI format 2_6.

The processor(s) 202 may control the transceiver(s) 206 to transmit first DCI format 2_6 within the monitoring window for monitoring first DCI format 2_6 within the DRX active time based on the above-described first information.

In other words, the monitoring window may be configured based on "Embodiment #1" and/or "Embodiment 3". First DCI format 2_6 may be transmitted based on "Embodiment #2". The SS set may be configured within the DRX active time based on "Embodiment #5".

Based on first DCI format 2_6, the processor(s) 102 may control the transceiver(s) 206 to transmit a PDCCH after the time gap based on "Embodiment #4". In this case, first DCI format 2_6 may include information on an SS set, PDCCH occasion, CORESET and/or BWP to be monitored by the LTE to receive scheduling DCI (e.g., DL assignment and/or LTL grant) after the time gap.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

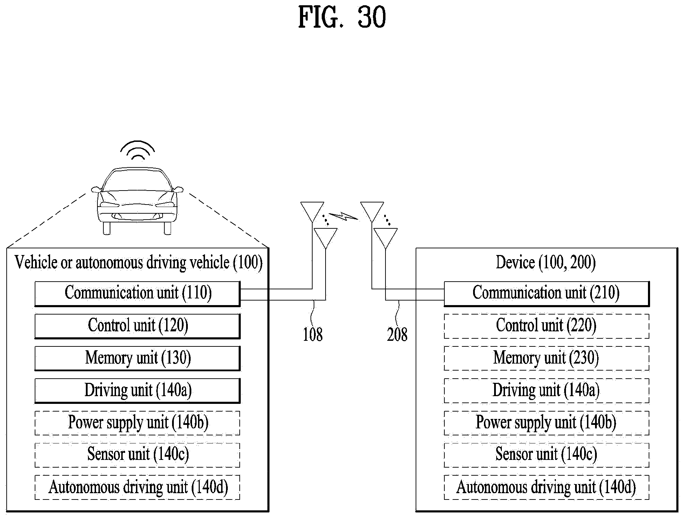

FIG. 30 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 30, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced

## EP 4 236 554 A1

therein.

**INDUSTRIAL APPLICABILITY**

While the above-described method of transmitting and receiving a DL control information and the apparatus therefor have been described based on an example applied to a 5G NR system, the method and apparatus are applicable to various wireless communication systems in addition to the 5G NR system.

## Claims

1. A method of receiving downlink control information (DCI) by a user equipment (LTE) supporting a discontinuous reception (DRX) operation in a wireless communication system, the method comprising:

   receiving first information related to a monitoring window for the DCI; and
   receiving the DCI within the monitoring window based on the first information,
   wherein the monitoring window is configured within a DRX active time,
   wherein the first information comprises information related to an offset and a duration of the monitoring window, and
   wherein the offset is a distance from a starting point of the DRX active time to a starting point of the monitoring window.

2. The method of claim 1, wherein the offset is expressed based on a number of slots.

3. The method of claim 1, wherein the DCI is received in a first search space (SS) set allocated within the monitoring window, and wherein monitoring is not performed in a second SS set allocated after the first SS set within the monitoring window.

4. The method of claim 1, wherein the first information comprises information related to a periodicity with which the monitoring window is repeatedly allocated, and wherein the monitoring window is repeatedly allocated within the DRX active time based on the information related to the periodicity.

5. The method of claim 1, wherein the DCI corresponds to DCI format 2_6.

6. A user equipment (LTE) supporting a discontinuous reception (DRX) operation and configured to receive downlink control information (DCI) in a wireless communication system, the UE comprising:

   at least one transceiver;
   at least one processor; and
   at least one memory operably connected to the at least one processor and configured to store instructions that, when executed, cause the at least one processor to perform operations comprising:

   receiving first information related to a monitoring window for the DCI through the at least one transceiver; and
   receiving the DCI within the monitoring window based on the first information through the at least one transceiver,
   wherein the monitoring window is configured within a DRX active time,
   wherein the first information comprises information related to an offset and a duration of the monitoring window, and
   wherein the offset is a distance from a starting point of the DRX active time to a starting point of the monitoring window.

7. The LTE of claim 6, wherein the offset is expressed based on a number of slots.

8. The UE of claim 6 wherein the DCI is received in a first search space (SS) set allocated within the monitoring window, and wherein monitoring is not performed in a second SS set allocated after the first SS set within the monitoring window.

9. The UE of claim 6, wherein the first information comprises information related to a periodicity with which the monitoring window is repeatedly allocated, and wherein the monitoring window is repeatedly allocated within the DRX active time based on the information related to the periodicity.

10. The LTE of claim 6, wherein the DCI corresponds to DCI format 2_6.

11. An apparatus supporting a discontinuous reception (DRX) operation and configured to receive downlink control information (DCI) in a wireless communication system, the apparatus comprising:

at least one processor; and
at least one memory operably connected to the at least one processor and configured to store instructions that, when executed, cause the at least one processor to perform operations comprising:

receiving first information related to a monitoring window for the DCI; and
receiving the DCI within the monitoring window based on the first information,
wherein the monitoring window is configured within a DRX active time,
wherein the first information comprises information related to an offset and a duration of the monitoring window, and
wherein the offset is a distance from a starting point of the DRX active time to a starting point of the monitoring window.

12. A computer-readable storage medium comprising at least one computer program that causes at least one processor to perform operations comprising:

receiving first information related to a monitoring window for the DCI; and
receiving the DCI within the monitoring window based on the first information,
wherein the monitoring window is configured within a DRX active time,
wherein the first information comprises information related to an offset and a duration of the monitoring window, and
wherein the offset is a distance from a starting point of the DRX active time to a starting point of the monitoring window.

13. A method of transmitting downlink control information (DCI) by a base station capable of configuring a discontinuous reception (DRX) operation in a wireless communication system, the method comprising:

transmitting first information related to a monitoring window for the DCI; and
transmitting the DCI within the monitoring window based on the first information,
wherein the monitoring window is configured within a DRX active time,
wherein the first information comprises information related to an offset and a duration of the monitoring window, and
wherein the offset is a distance from a starting point of the DRX active time to a starting point of the monitoring window.

14. A base station capable of configuring a discontinuous reception (DRX) operation and configured to transmit downlink control information (DCI) in a wireless communication system, the base station comprising:

at least one transceiver;
at least one processor; and
at least one memory operably connected to the at least one processor and configured to store instructions that, when executed, cause the at least one processor to perform operations comprising:

transmitting first information related to a monitoring window for the DCI through the at least one transceiver; and
transmitting the DCI within the monitoring window based on the first information through the at least one transceiver,
wherein the monitoring window is configured within a DRX active time,
wherein the first information comprises information related to an offset and a duration of the monitoring window, and
wherein the offset is a distance from a starting point of the DRX active time to a starting point of the monitoring

window.

# FIG. 1

EP 4 236 554 A1

| INITIAL CELL SEARCH | SYSTEM INFORMATION RECEPTION | RANDOM ACCESS PROCEDURE | GENERAL DL/UL Tx/Rx S18 |
|---|---|---|---|
| PSS/SSS & [DLRS] & PBCH | PDCCH/ PDSCH (BCCH) | PRACH  PDCCH/ PDSCH  PRACH  PDCCH/ PDSCH | PDCCH/ PDSCH  PUSCH/ PUCCH |

S11      S12      S13   S14      S15   S16      S17

· DL/UL ACK/NACK
· UE CQI/PMI/RI RANK REPORT
  USING PUSCH AND PUCCH

# FIG. 2

| . . . . . . | One Frame (10ms) | . . . . . . |

| . . . . . . | Half-Frame (5ms) | Half-Frame (5ms) | . . . . . . |

| . . . . . . | Subframe 0 (1ms) | . . . . . . | Subframe 4 (1ms) | Subframe 5 (1ms) | . . . . . . | Subframe 9 (1ms) | . . . . . . |

Subframe (1ms)

| 15KHz | Slot (14 symbols) |

1ms

| 30KHz | Slot 0 (14 symbols) | Slot 1 |

500us

| 60KHz | Slot 0 (14 symbols) | Slot 1 | Slot 2 | Slot 3 |

250us

| 120KHz | Slot 0 (14 symbols) | Slot 1 | Slot 2 | Slot 3 | Slot 4 | Slot 5 | Slot 6 | Slot 7 |

125us

# FIG. 3

# FIG. 4

## FIG. 5

# FIG. 6

# FIG. 7

(a)

Non - interleaved CCE - to - REG mapping

(b)

EP 4 236 554 A1

# FIG. 8

Block interleaver

Write

Read

A

P/A

# FIG. 9

| UE | | BS |
|---|---|---|

Idle mod DRX configuration (S910)

S920 — | Determine PF and P0 with in DRX cycle |

S930 — | PDCCH monitoring |

FIG. 10

Scheduling start

☐ PDCCH monitoring

Data Reception    Subframe=1ms

Paging DRX Cycle

| 'RRC_Connected' state | 'RRC_Idle' state |

# FIG. 11

UE      BS

RRC signaling (DRX confuguration) (S1110)

MAC CE (DRX Command=DRX 'ON') (S1120)

S1130 — PDCCH monitoring

# FIG. 12

battery saving

Scheduling start

PDCCH monitoring

sleep

Data
Reception

Short DRX
Cycle (option)

Long DRX
Cycle

Paging DRX Cycle

DRX inactivity timer

RRC inactivity timer

| 'RRC_Connected' state | 'RRC_Idle' state |
|-----------------------|------------------|

# FIG. 13

# FIG. 14

Monitoring window of DCI format 2-6

Time gap

On-duration

Actual monitoring occasions

Monitoring periodicity of the SS set

ps-Offset

Monitoring occasion

duration
(within SS set config.)

# FIG. 15

```
┌─────────────────────────────────────┐
│ Receiving first information for       │
│ configuring a monitoring window for   │──── S1501
│ a first DCI format 2_6 in a DRX       │
│ active time                           │
└─────────────────────────────────────┘
                  │
                  ▼
┌─────────────────────────────────────┐
│ Receiving a second DCI format 2_6     │──── S1503
│ outside the DRX active time           │
└─────────────────────────────────────┘
                  │
                  ▼
┌─────────────────────────────────────┐
│ Starting the DRX active Time          │──── S1505
│ (i.e., On-duration)                   │
└─────────────────────────────────────┘
                  │
                  ▼
┌─────────────────────────────────────┐
│ Receiving the first DCI format 2_6    │
│ within the monitoring window          │──── S1507
│ configured based on the first         │
│ information                           │
└─────────────────────────────────────┘
                  │
                  ▼
┌─────────────────────────────────────┐
│ Receiving PDCCH based on the first    │──── S1509
│ DCI format 2_6                        │
└─────────────────────────────────────┘
```

# FIG. 16

Transmitting first information for configuring a
monitoring window for a first DCI format
2_6 in a DRX active time — S1601

Transmitting a second DCI format 2_6
outside the DRX active time — S1603

Transmitting the first DCI format 2_6
based on the first information — S1605

Transmitting PDCCH based on the
first DCI format 2_6 — S1607

# FIG. 17

UE

BS

Transmitting first information for configuring a monitoring window for a first DCI format 2_6 in a DRX active time (S1701)

Transmitting a second DCI format 2_6 outside the DRX active time (S1703)

S1705 —

Starting the DRX active Time (i.e., On-duration)

Transmitting the first DCI format 2_6 based on the first information (S1707)

Transmitting PDCCH based on the first DCI format 2_6 (S1709)

# FIG. 18

DRX active time

On-duration

Monitoring window of DCI format 2-6 in DRX active time

offset

duration

Periodicity

FIG. 19

System Frame

DRX active time

On-duration

Monitoring window of DCI format 2-6
in DRX active time

offset

# FIG. 20

DRX active time

On-duration

Monitoring window of DCI format 2-6
in DRX active time

offset

# FIG. 21

## FIG. 22

## FIG. 23

DRX active time

On-duration

Monitoring window of DCI format 2-6 in DRX active time

EP 4 236 554 A1

# FIG. 24

EP 4 236 554 A1

# FIG.25

DRX active time

On-duration

Monitoring window of DCI format 2-6 in DRX active time

duration

# FIG. 26

# FIG. 27

# FIG. 28

# FIG. 29

# FIG. 30

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2021/014202** |

**A. CLASSIFICATION OF SUBJECT MATTER**

**H04W 72/12**(2009.01)i; **H04W 72/04**(2009.01)i; **H04W 52/02**(2009.01)i; **H04L 5/00**(2006.01)i; **H04W 76/28**(2018.01)i

According to International Patent Classification (IPC) or to both national classification and IPC

**B. FIELDS SEARCHED**

Minimum documentation searched (classification system followed by classification symbols)

H04W 72/12(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오프셋(offset), 모니터링 윈도우(monitoring window), DCI, DRX Active Time, 주기(cycle), SS(Search Space) set

**C. DOCUMENTS CONSIDERED TO BE RELEVANT**

| Category* | Citation of document, with indication, where appropriate, of the relevant passages | Relevant to claim No. |
|---|---|---|
| A | LG ELECTRONICS. Remaining issues on PDCCH-based power saving signal/channel. R1-2001943, 3GPP TSG RAN WG1 #100bis. e-Meeting. 10 April 2020.<br>See sections 2-3; and figure 2. | 1-14 |
| A | HUAWEI et al. Remaining issues on PDCCH based power saving. R1-2003518, 3GPP TSG RAN WG1 Meeting #101-e. E-meeting. 16 May 2020.<br>See section 2.2. | 1-14 |
| A | CATT. Preparation Summary of PDCCH based Power Saving Signal/Channel. R1-2004723, 3GPP TSG RAN WG1 Meeting #101-e. e-Meeting. 25 May 2020.<br>See pages 7-15. | 1-14 |
| A | 3GPP; TSG RAN; NR; Multiplexing and channel coding (Release 16). 3GPP TS 38.212 V16.3.0 ( September 2020). 01 October 2020.<br>See section 7.3.1.3.7. | 1-14 |
| A | KR 10-2020-0085698 A (LG ELECTRONICS INC.) 15 July 2020 (2020-07-15)<br>See paragraphs [0425]-[0431]; and figure 19. | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 January 2022** | **28 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/014202**

| Patent document cited in search report | | | Publication date (day/month/year) | Patent family member(s) | | | Publication date (day/month/year) |
|---|---|---|---|---|---|---|---|
| KR | 10-2020-0085698 | A | 15 July 2020 | CN | 110710318 | A | 17 January 2020 |
| | | | | EP | 3621396 | A1 | 11 March 2020 |
| | | | | JP | 2020-521390 | A | 16 July 2020 |
| | | | | JP | 6914366 | B2 | 04 August 2021 |
| | | | | KR | 10-2019-0123244 | A | 31 October 2019 |
| | | | | KR | 10-2019-0139813 | A | 18 December 2019 |
| | | | | KR | 10-2055366 | B1 | 12 December 2019 |
| | | | | KR | 10-2135395 | B1 | 17 July 2020 |
| | | | | KR | 10-2236942 | B1 | 07 April 2021 |
| | | | | US | 10897775 | B2 | 19 January 2021 |
| | | | | US | 11140703 | B2 | 05 October 2021 |
| | | | | US | 2020-0008225 | A1 | 02 January 2020 |
| | | | | US | 2020-0344783 | A1 | 29 October 2020 |
| | | | | WO | 2019-209017 | A1 | 31 October 2019 |

Form PCT/ISA/210 (patent family annex) (July 2019)